# EUROPEAN PATENT APPLICATION

(11) **EP 4 730 158 A1**
(43) Date of publication of application: **22.04.2026**
(21) Application number: 24919712.0
(22) Date of filing: 28.08.2024
(51) Int. Cl.: G06F 16/9535

(54) **SERVICE RECOMMENDATION METHOD AND ELECTRONIC DEVICE**

(30) Priority: 24.01.2024 CN 202410104702
(71) Applicant: Huawei Technologies Co., Ltd., Shenzhen, Guangdong 518129 (CN)
(72) Inventor: LV, Ting, Shenzhen, Guangdong 518129 (CN); BIAN, Sucheng, Shenzhen, Guangdong 518129 (CN); MAO, Feng, Shenzhen, Guangdong 518129 (CN); REN, Jie, Shenzhen, Guangdong 518129 (CN)
(74) Representative: Pfenning, Meinig & Partner mbB
(86) International application number: PCT/CN2024/115270
(87) International publication number: WO 2025/156631

(57) **Abstract**

A service recommendation method and an electronic device are disclosed. In the method, based on information included in a current display interface of the electronic device, when detecting an operation on first information included in the current display interface, the electronic device may use the first information as reference information, and perform service recommendation on a user. Then, when determining that there is a recommended service, the electronic device may prompt, by using a shortcut entry, the user to view the recommended service, for example, may prompt the user by using a blinking prompt bar. In this way, the user can directly view the recommended service by using the shortcut entry, and the user does not need to manually open another application or another display interface based on the first information. This can reduce operation steps of the user, improve operation efficiency, and improve use convenience and experience of the user.

## Description

### CROSS-REFERENCE TO RELATED APPLICATIONS

This application claims priority to Chinese Patent Application No. 202410104702.8, filed with the China National Intellectual Property Administration on January 24, 2024 and entitled "SERVICE RECOMMENDATION METHOD AND ELECTRONIC DEVICE", which is incorporated herein by reference in its entirety.

### TECHNICAL FIELD

Embodiments of this application relate to the field of terminal technologies, and in particular, to a service recommendation method and an electronic device.

### BACKGROUND

With development and progress of technologies, functions of an electronic device are gradually improved and enriched, a quantity of applications is gradually increased, and frequency at which a user uses the electronic device in daily life accordingly increases, causing an increasingly prominent operation efficiency problem.

For example, in a process of using a mobile phone, a user often needs to leave a currently used application, open another application, and perform operations such as next-step search and viewing. Then, the user completes the operations, and returns to continue to use the previous application. The entire procedure is long, and running of the currently used application is interrupted, resulting in low operation efficiency. Consequently, inconvenience is caused to the user.

### SUMMARY

Embodiments of this application provide a service recommendation method and an electronic device, to recommend a service based on reference information, and prompt, by using a shortcut entry, a user with a recommended service, so as to remind the user to view. In addition, an entry for service recommendation may be further provided in a current interface, so that an interaction path can be shortened, and operation efficiency can be improved.

According to a first aspect, an embodiment of this application provides a service recommendation method. The method may be applied to an electronic device. In the method, a first interface is updated in response to a first operation on first information included in the first interface, where the updated first interface includes a shortcut entry, and the shortcut entry indicates that a recommended service for the first information exists; and a second interface is displayed in response to a second operation on the shortcut entry, where the second interface is used to display the recommended service for the first information.

In this method, service recommendation is performed based on an operation on some information included in a currently displayed interface and by using the some information as reference information. When it is determined that the recommended service exists, a user may be prompted to view the recommended service by using the shortcut entry. In this way, the user may view, by using the shortcut entry, the recommended service obtained based on the reference information, so that operation steps of the user can be reduced, and a currently running application or process does not need to be interrupted, thereby providing convenience for the user and improving user experience.

In a possible design, the second interface includes a first display area, the first display area is used to display a plurality of recommended services of a first user intention obtained based on the first information, and the method further includes: in response to a third operation on the first display area, switching from displaying a first recommended service to displaying a second recommended service in the first display area, where the first recommended service and the second recommended service come from different applications. In another possible design, the second interface may alternatively display the N recommended services at the same time, or display the N recommended services at the same time by using a scrollable display area.

In this design, the recommended service may include a plurality of recommended services belonging to a same user intention, for example, may be from a plurality of applications, and provides a plurality of selection options for the user, so that the recommended service can better fit a user habit.

In a possible design, the shortcut entry has a preset display effect. For example, the preset display effect includes at least one of the following: a preset color and a preset animation.

In this design, a preset display effect is set for the shortcut entry, so that the user can be better prompted to view. In this way, on the basis of reducing an impact on the current display interface, user's attention to the shortcut entry can be improved.

In a possible design, the second interface is a non-full-screen interface based on the first interface. Optionally, the non-full-screen interface may be a semi-modal interface based on the first interface. The semi-modal interface may also be referred to as a semi-modal window or the like. Optionally, the non-full-screen interface may alternatively be a floating window, a pop-up window, or the like.

In this design, the recommended service is displayed by using the non-full-screen interface like the semi-modal interface, so that a display impact on a current display interface can be reduced, and the recommended service can be further displayed to the user, so that more content can be displayed to the user.

In a possible design, before the updating the first interface in response to the first operation on the first information included in the first interface, the method further includes: obtaining an available service of an application installed on the electronic device, where the available service is used to determine the recommended service based on the first information.

In this design, by collecting the available service of the application installed on the electronic device, the recommended service may be more accurately provided for the user based on the collected available service.

In a possible design, before the updating the first interface in response to the first operation on the first information included in the first interface, the method further includes: obtaining target user behavior information of a target user account, where the target user behavior information is used to perform service recommendation. Optionally, the recommended service included in the second interface is determined based on the target user behavior information, and the target user account is a user account logged in to the electronic device.

In this design, service recommendation may be performed with reference to a use habit of the user by collecting historical behavior information of the user, so that the recommended service can better fit the user habit, thereby improving user experience.

In a possible design, the recommended service included in the second interface is obtained after the candidate recommended service is screened based on the target user behavior information, where the candidate recommended service is obtained based on the first user intention; and the recommended service included in the second interface is a service that is not used by the user and that is determined based on the target user behavior information. It may also be understood that, based on the target user behavior information, when it is determined that the user has used the to-be-recommended services within preset historical duration, the to-be-recommended services may be screened.

In this design, by collecting historical behavior information of the user, the candidate recommended service may be further screened with reference to a historical behavior of the user, so that accuracy of the recommended service displayed in the interface can be improved, and viewing efficiency of the user for the recommended service can be improved.

In a possible design, the first information includes at least one of the following types: a text and a picture.

In this design, a service recommendation in more scenarios can be met by using the text and/or the picture as reference information, and accuracy of the service recommendation can be improved by using the text and the picture as the reference information.

In a possible design, when the first information includes protocol-type text information, the first user intention is obtained by performing protocol identification on the first information; and/or when the first information includes a named entity, the first user intention is obtained by performing named entity recognition (named entity recognition, NER) processing on the first information; and/or when the first information includes text information, the first user intention is obtained by performing semantic understanding on the first information; and/or when the first information includes picture information, the first user intention is obtained by performing image recognition on the first information.

In this design, the electronic device may perform different analysis processing based on different types of the first information, so that accuracy of service recommendation can be ensured.

In a possible design, when the first information is the protocol-type text information, the recommended service includes: a commodity viewing service, a video viewing service, or a merchant viewing service; or when the first information includes the named entity, the recommended service includes at least one of the following types: a navigation recommended service, a taxi hailing recommended service, a merchant viewing service, and a schedule creation service; or when the first information includes the text information, the recommended service includes at least one of the following types: a schedule creation service, an audio recommended service, a video recommended service, a translation service, a navigation recommended service, a taxi hailing recommended service, and a merchant viewing service; or when the first information includes the picture information, the recommended service includes at least one of the following types: a schedule creation service, an audio recommended service, a video recommended service, a translation service, a navigation recommended service, a taxi hailing recommended service, and a merchant viewing service.

In this design, the electronic device may recommend a corresponding service based on different types of the first information, so that accuracy of service recommendation can be ensured.

In a possible design, when the protocol-type text information is a commodity protocol password, the recommended service is a commodity viewing service; when the protocol-type text information is a video protocol password, the recommended service is a video viewing service; when the protocol-type text information is a merchant protocol password, the recommended service is a merchant viewing service; and when the named entity includes a position, the recommended service includes at least one of the following types: a navigation recommended service and a taxi recommended service.

In this design, the electronic device may recommend a corresponding service based on different types of the first information, so that accuracy of service recommendation can be ensured.

According to a second aspect, an embodiment of this application provides a service recommendation method. The method may be applied to an electronic device. In the method, a first operation on first information included in a first interface is detected; and in response to the first operation, a second interface is displayed, where the second interface is used to display a plurality of recommended services of a first user intention obtained based on the first information.

In a possible design, the method further includes: in response to a second operation in the second interface, switching from displaying a first recommended service to displaying a second recommended service, where the first recommended service and the second recommended service belong to the plurality of recommended services of the first user intention. In another possible design, the second interface may alternatively display the plurality of recommended services at the same time, or display the plurality of recommended services at the same time by using a scrollable display area.

In a possible design, the second interface includes a first display area, and the first display area is used to display the plurality of recommended services; and the second interface further includes a second display area, where the second display area is used to display at least one recommended service of a second user intention obtained based on the first information. It should be understood that a quantity of display areas included in the second interface may be determined based on a quantity of user intentions obtained based on the first information.

In a possible design, the displaying the second interface in response to the first operation further includes: updating the first interface in response to the first operation, where the updated first interface includes a shortcut entry, and the shortcut entry indicates that a recommended service for the first information exists; and displaying the second interface in response to a second operation on the shortcut entry. It should be understood that the second interface may be directly displayed in response to the first operation, or the second interface may be displayed after a user is first prompted, by using the shortcut entry, that a recommended service exists, and an operation of determining, by the user, to view the recommended service is detected.

In a possible design, the shortcut entry has a preset display effect.

In a possible design, the preset display effect includes at least one of the following: a preset color and a preset animation.

In a possible design, the second interface is a non-full-screen interface based on the first interface. Optionally, the non-full-screen interface may be a semi-modal interface based on the first interface. Optionally, the non-full-screen interface may alternatively be a floating window, a pop-up window, or the like.

In a possible design, before the updating the first interface in response to the first operation on the first information included in the first interface, the method further includes: obtaining an available service of an application installed on the electronic device, where the available service is used to determine the recommended service based on the first information.

In a possible design, before the updating the first interface in response to the first operation on the first information included in the first interface, the method further includes: collecting target user behavior information on the electronic device, where the target user behavior information is used to perform service recommendation.

In a possible design, the recommended service included in the second interface is determined based on the target user behavior information.

In a possible design, the recommended service included in the second interface is obtained after the candidate recommended service is screened based on the target user behavior information, where the candidate recommended service is obtained based on the first user intention; and the recommended service included in the second interface is a service that is not used by the user and that is determined based on the target user behavior information.

In a possible design, the first information includes at least one of the following types: a text and a picture.

In a possible design, when the first information includes protocol-type text information, the first user intention is obtained by performing protocol identification on the first information; and/or when the first information includes a named entity, the first user intention is obtained by performing NER processing on the first information; and/or when the first information includes text information, the first user intention is obtained by performing semantic understanding on the first information; and/or when the first information includes picture information, the first user intention is obtained by performing image recognition on the first information.

In a possible design, when the first information is the protocol-type text information, the recommended service includes: a commodity viewing service, a video viewing service, or a merchant viewing service; or when the first information includes the named entity, the recommended service includes at least one of the following types: a navigation recommended service, a taxi hailing recommended service, a merchant viewing service, and a schedule creation service; or when the first information includes the text information, the recommended service includes at least one of the following types: a schedule creation service, an audio recommended service, a video recommended service, a translation service, a navigation recommended service, a taxi hailing recommended service, and a merchant viewing service; or when the first information includes the picture information, the recommended service includes at least one of the following types: a schedule creation service, an audio recommended service, a video recommended service, a translation service, a navigation recommended service, a taxi hailing recommended service, and a merchant viewing service.

In a possible design, when the protocol-type text information is a commodity protocol password, the recommended service is a commodity viewing service; when the protocol-type text information is a video protocol password, the recommended service is a video viewing service; when the protocol-type text information is a merchant protocol password, the recommended service is a merchant viewing service; and when the named entity includes a position, the recommended service includes at least one of the following types: a navigation recommended service and a taxi recommended service.

According to a third aspect, this application provides an electronic device. The electronic device includes a plurality of functional modules, and the plurality of functional modules interact with each other, to implement the method performed by the electronic device in any one of the foregoing aspects and the implementations of the foregoing aspects. The plurality of functional modules may be implemented based on software, hardware, or a combination of software and hardware, and the plurality of functional modules may be randomly combined or divided based on specific implementation.

According to a fourth aspect, this application provides an electronic device, including at least one processor and at least one memory. The at least one memory stores computer program instructions, and when the electronic device runs, the at least one processor performs the method performed by the electronic device in any one of the foregoing aspects and the implementations of the foregoing aspects.

According to a fifth aspect, this application further provides a computer-readable storage medium. The computer-readable storage medium stores a computer program, and when the computer program is executed by a computer, the computer is enabled to perform the method performed by the electronic device in any one of the foregoing aspects and the possible designs of the foregoing aspects.

According to a sixth aspect, this application provides a computer program product. The computer program product includes a computer program (which may also be referred to as code or instructions), and when the computer program is run, a computer is enabled to perform the method performed by the electronic device in any one of the foregoing aspects and the possible designs of the foregoing aspects.

According to a seventh aspect, an embodiment of this application further provides a graphical user interface on an electronic device. The electronic device has a display, one or more memories, and one or more processors, the one or more processors are configured to execute one or more computer programs stored in the one or more memories, and the graphical user interface includes a graphical user interface displayed when the electronic device performs any one of the foregoing aspects and the possible designs of the foregoing aspects.

According to an eighth aspect, this application further provides a chip. The chip is configured to read a computer program stored in a memory, to perform the method performed by an electronic device in any one of the foregoing aspects and the possible designs of the foregoing aspects.

According to a ninth aspect, this application further provides a chip system. The chip system includes a processor configured to support a computer apparatus in implementing the method performed by an electronic device in any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete component.

For beneficial effects of any one of the second aspect to the ninth aspect and the possible designs of the second aspect to the ninth aspect, specifically refer to beneficial effects of the possible designs of the first aspect. Details are not described herein again.

### BRIEF DESCRIPTION OF DRAWINGS

FIG. 1 is a diagram of a possible hardware structure of an electronic device according to an embodiment of this application;
FIG. 2 is a block diagram of a software architecture of an electronic device according to an embodiment of this application;
FIG. 3A-1 to FIG. 3A-3 are interface diagrams 1 of a service recommendation method according to an embodiment of this application;
FIG. 3B-1 to FIG. 3B-3 are interface diagrams 2 of a service recommendation method according to an embodiment of this application;
FIG. 3C-1 to FIG. 3C-3 are interface diagrams 3 of a service recommendation method according to an embodiment of this application;

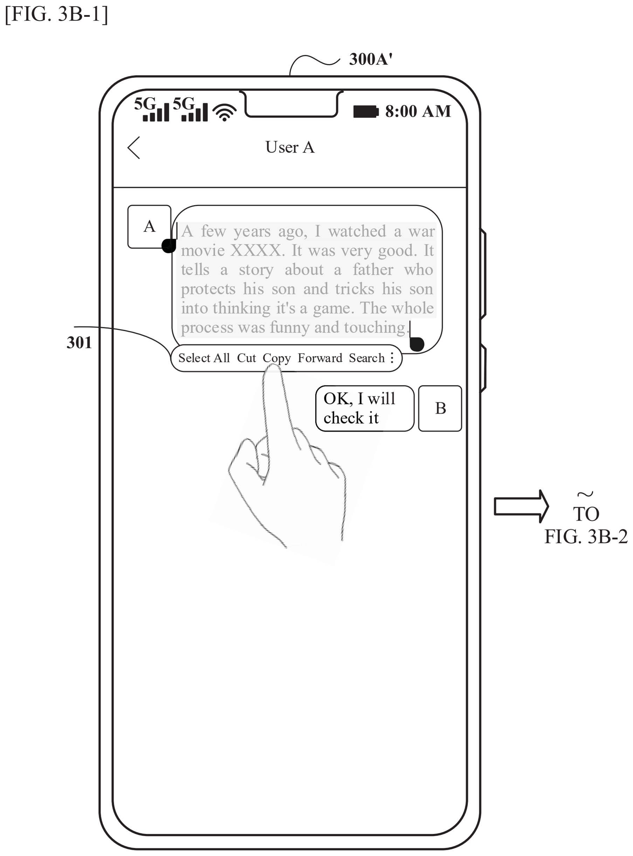

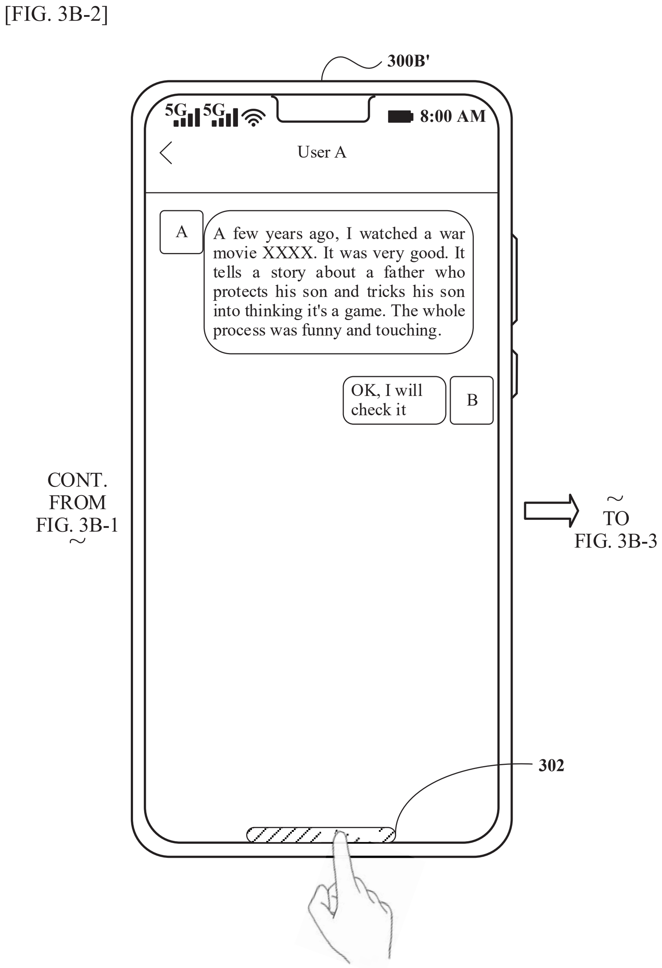

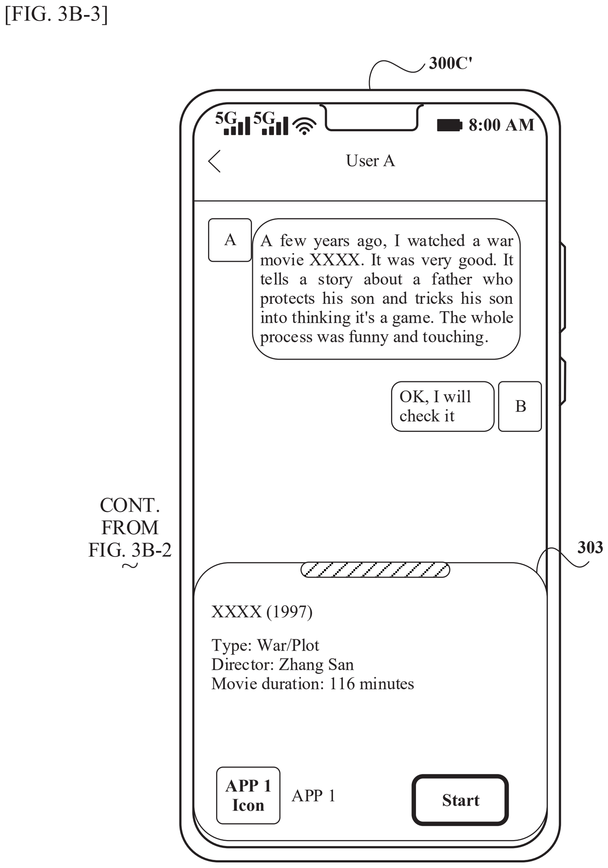

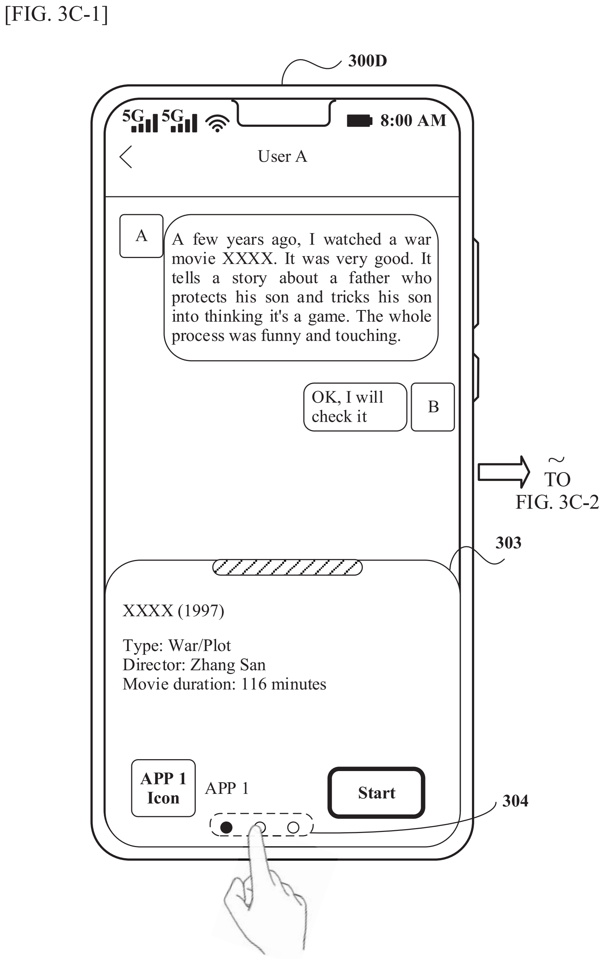

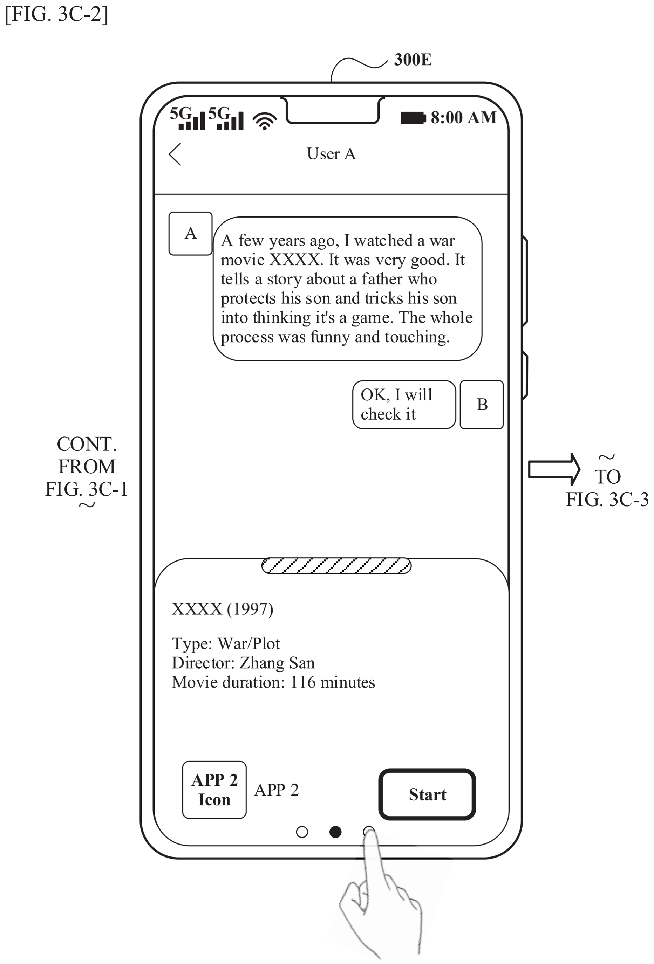

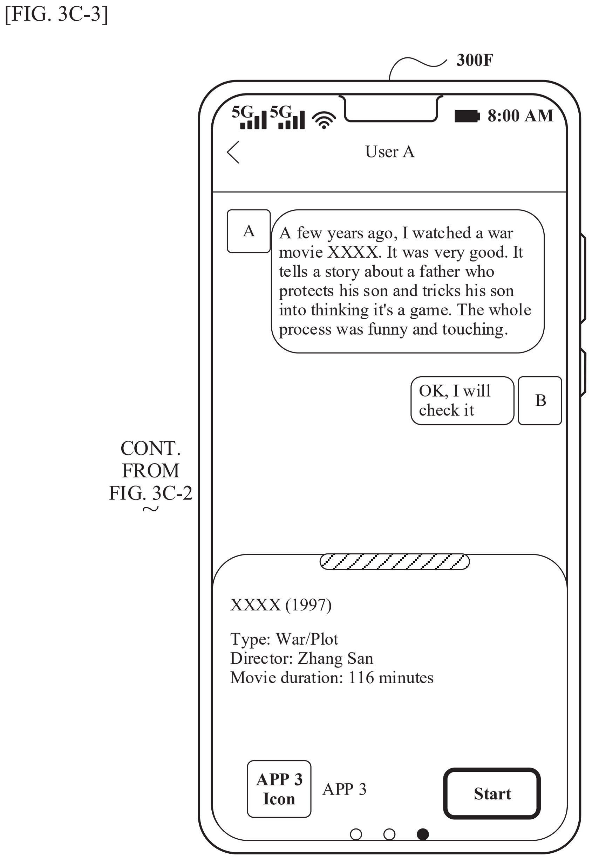

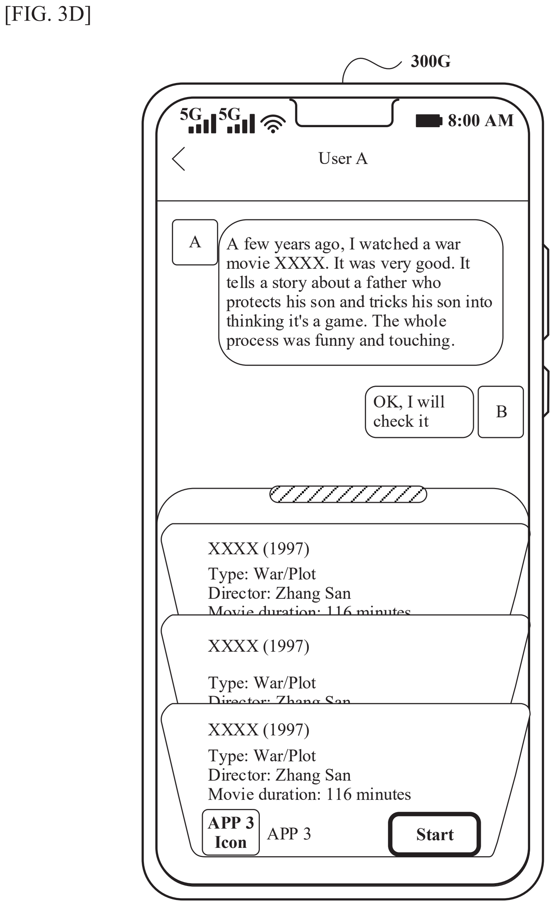

FIG. 3D is an interface diagram 4 of a service recommendation method according to an embodiment of this application;

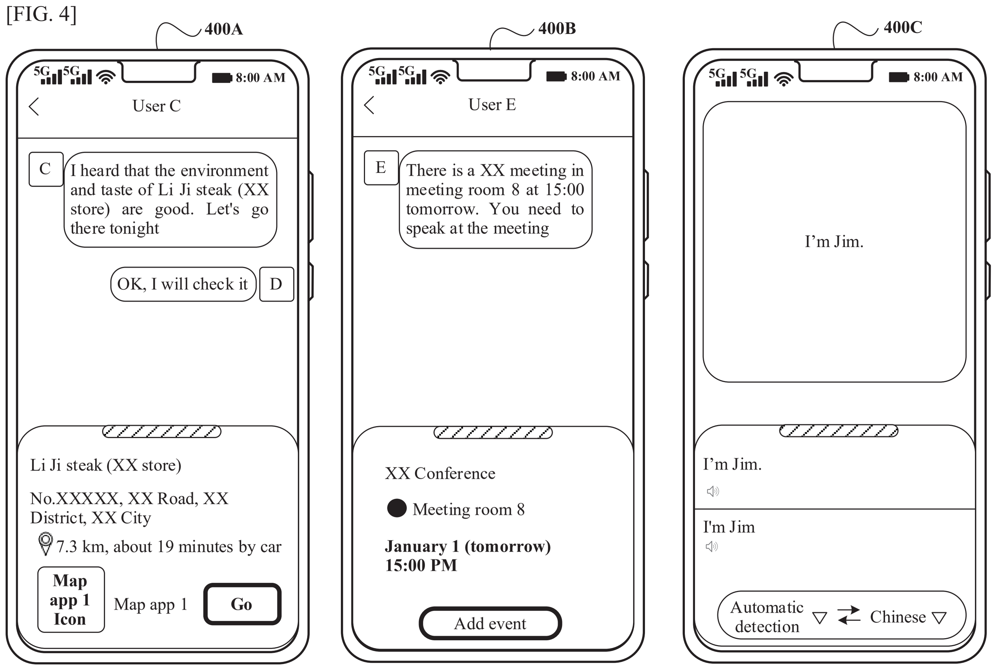

FIG. 4 is an interface diagram 5 of a service recommendation method according to an embodiment of this application;
FIG. 5A-1 to FIG. 5A-3 are interface diagrams 6 of a service recommendation method according to an embodiment of this application;
FIG. 5B-1 to FIG. 5B-4 are interface diagrams 7 of a service recommendation method according to an embodiment of this application;

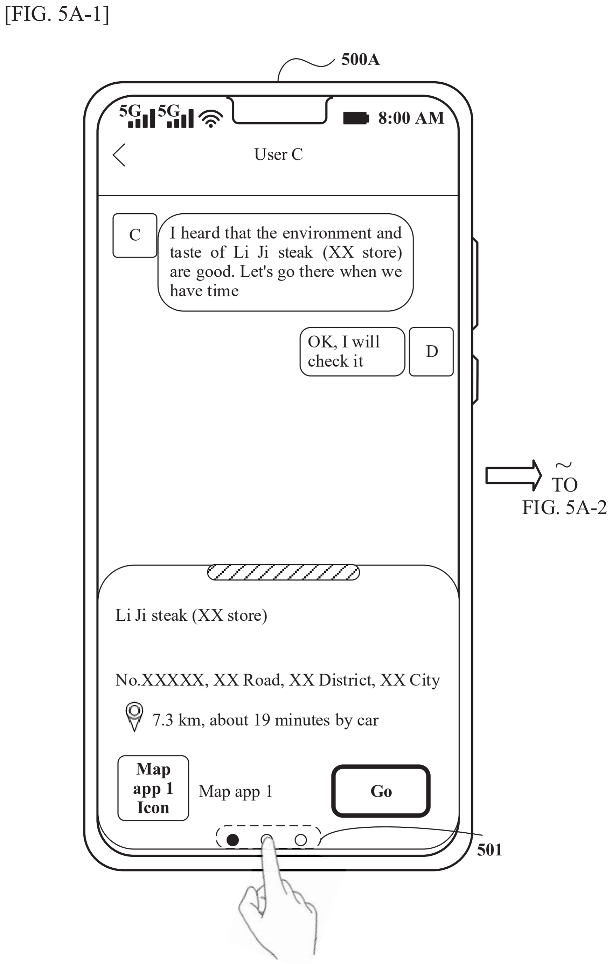

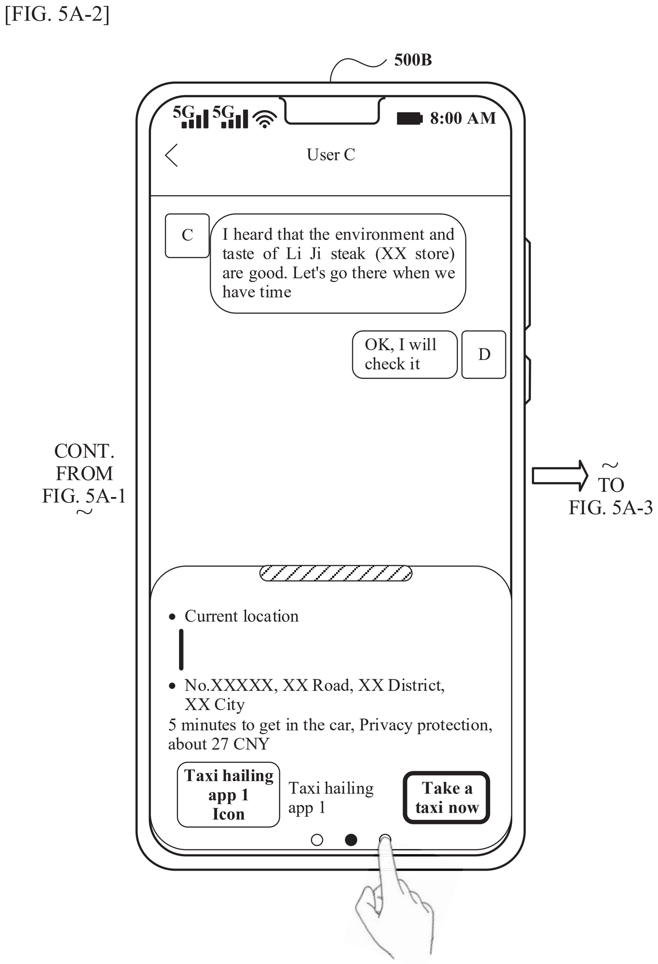

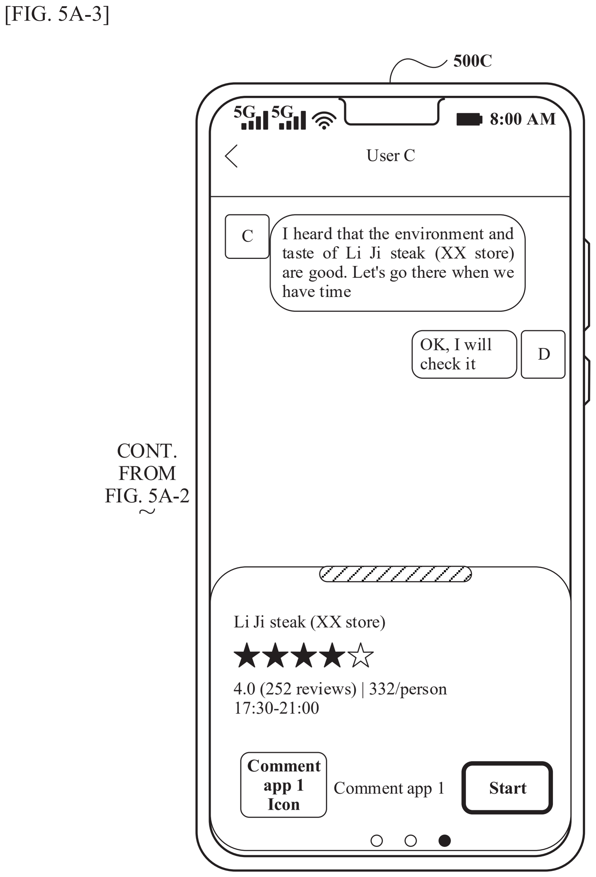

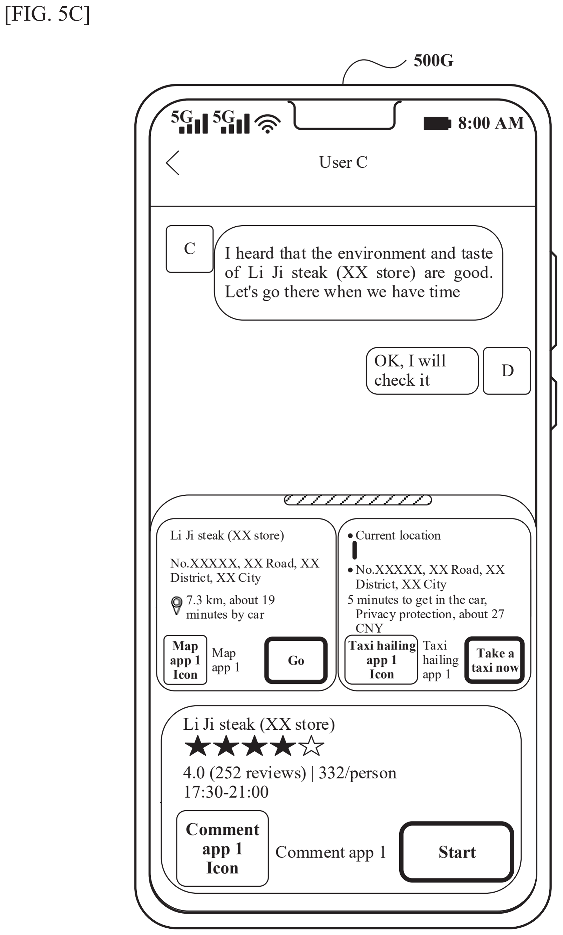

FIG. 5C is an interface diagram 8 of a service recommendation method according to an embodiment of this application;

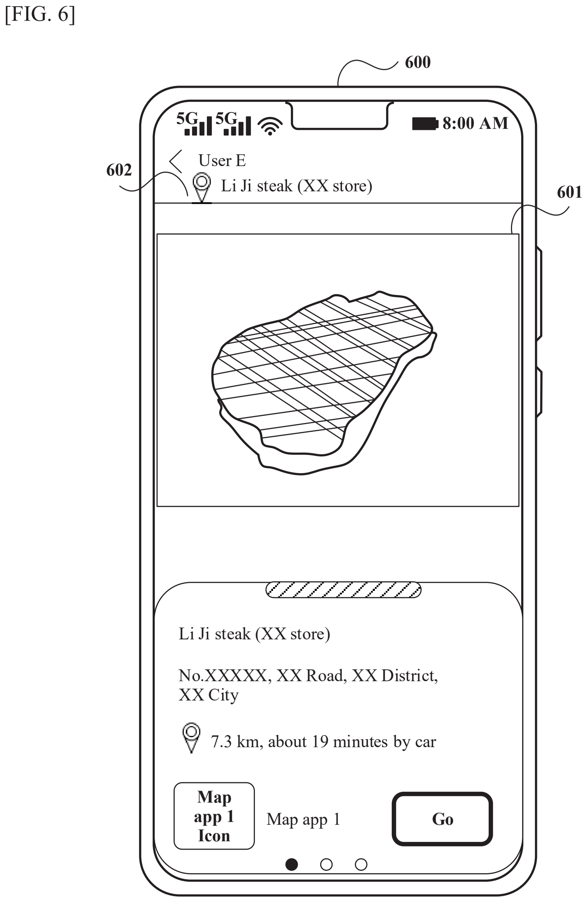

FIG. 6 is an interface diagram 9 of a service recommendation method according to an embodiment of this application;
FIG. 7A-1 to FIG. 7A-6 are interface diagrams 10 of a service recommendation method according to an embodiment of this application;
FIG. 7B-1 and FIG. 7B-2 are interface diagrams 11 of a service recommendation method according to an embodiment of this application;
FIG. 7C-1 and FIG. 7C-2 are interface diagrams 12 of a service recommendation method according to an embodiment of this application;

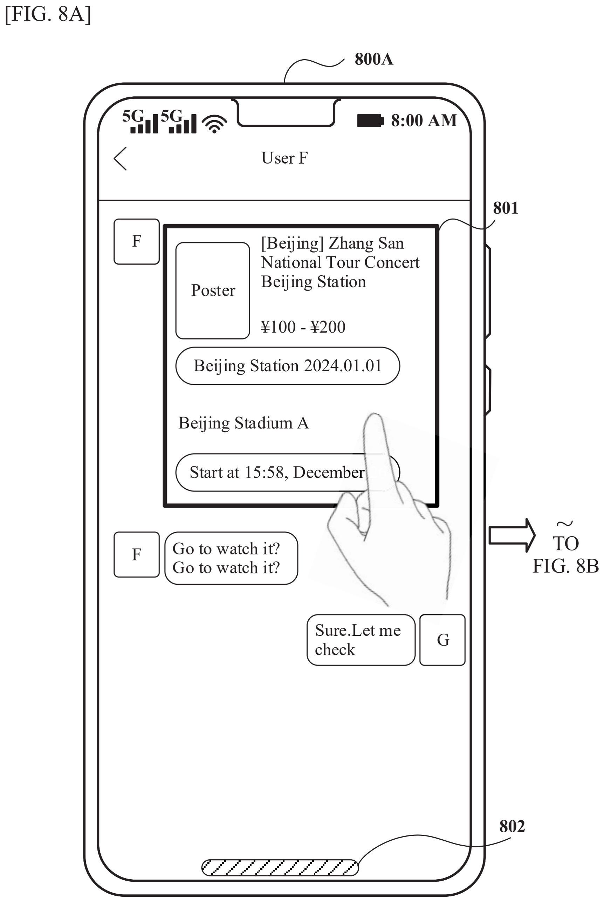

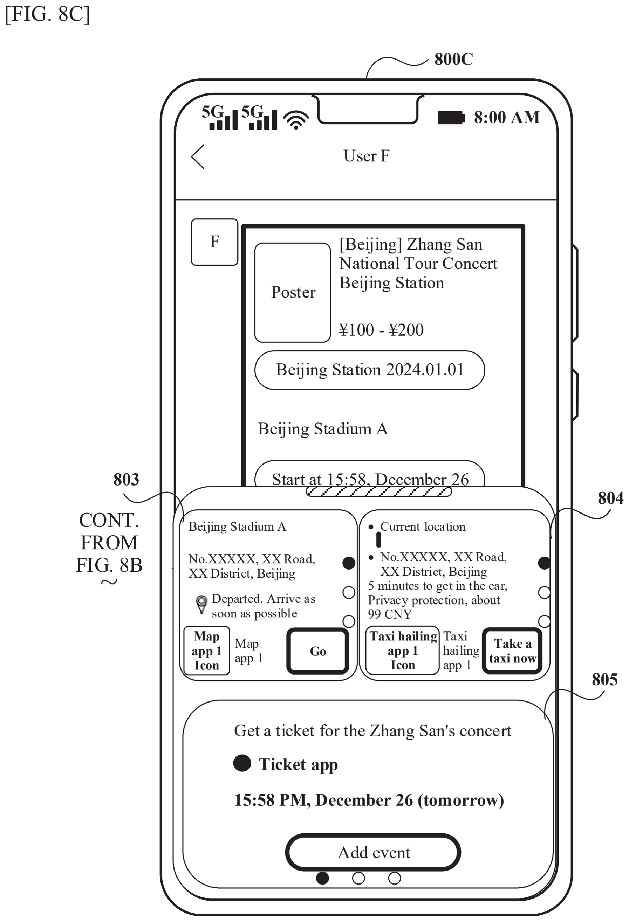

FIG. 8A to FIG. 8C are interface diagrams 13 of a service recommendation method according to an embodiment of this application;

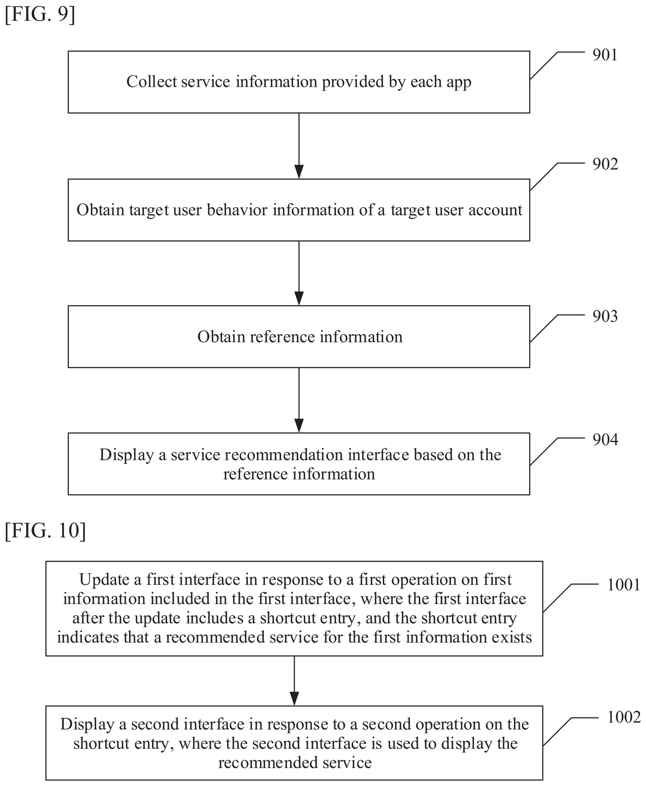

FIG. 9 is a schematic flowchart of a service recommendation method according to an embodiment of this application; and
FIG. 10 is another schematic flowchart of a service recommendation method according to an embodiment of this application.

### DESCRIPTION OF EMBODIMENTS

The following describes in detail embodiments of this application with reference to accompanying drawings.

Embodiments of this application may be applied to the field of terminal technologies, and is specifically applicable to, for example, a scenario in which cross-application processing is required, or a scenario in which one interface needs to jump to another interface. In a possible scenario, in a chat interface between a user A and a user B, the user B sends chat information, and the chat information mentions a movie XX. When the user wants to learn more about the movie XX, a common operation procedure includes: exiting a chat application (application, app), searching for a video app, a comment app, a movie ticket purchase app, or the like on a desktop, opening the video app, entering a keyword (for example, a movie name) in the video app, and viewing content displayed based on keyword search. In this scenario, because cross-application processing is required, there are problems of a large quantity of user operation steps and low operation efficiency.

In view of this, an embodiment of this application provides a service recommendation method. In the method, reference information is obtained from a current interface, processing like semantic analysis, semantic understanding, image recognition, and content recognition is performed based on the reference information, and a service is recommended; and a shortcut entry is displayed to prompt a user to view the recommended service. In addition, according to the method provided in this embodiment of this application, intention recognition may be performed based on the reference information, so that multi-service recommendation from a plurality of applications under a same intention can be implemented based on a recognized intention. In this way, the multi-service recommendation based on the plurality of applications can improve diversity and accuracy of service recommendation, and improve selectivity of the user.

The technical solutions in embodiments of this application may be applied to an electronic device, and the electronic device may be any device that can display an interface. For example, the electronic device may be an electronic device that can display an interface, for example, a mobile phone, a tablet computer, a wearable device (for example, a watch or a band), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television). It may be understood that a specific type of the electronic device is not limited in embodiments of this application.

An example embodiment of an electronic device to which embodiments of this application may be applied may include but is not limited to an electronic device using HarmonyOS^{®}, IOS^{®}, Android^{®}, Microsoft^{®}, or another operating system. The electronic device may be, for example, the electronic device described in the foregoing embodiments.

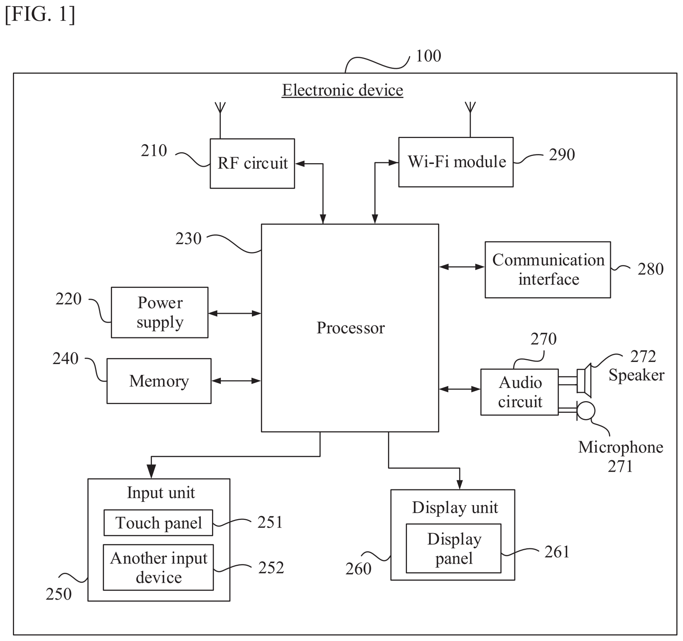

FIG. 1 is a diagram of a possible hardware structure of an electronic device. The electronic device 100 includes components such as a radio frequency (radio frequency, RF) circuit 210, a power supply 220, a processor 230, a memory 240, an input unit 250, a display unit 260, an audio circuit 270, a communication interface 280, and a Wi-Fi module 290. A person skilled in the art may understand that the hardware structure of the electronic device 100 shown in FIG. 1 does not constitute a limitation on the electronic device 100. The electronic device 100 provided in this embodiment of this application may include more or fewer components than those shown in the figure, or a combination of two or more components, or different component configurations. The components shown in FIG. 1 may be implemented in hardware, software, or a combination of hardware and software including one or more signal processing and/or application-specific integrated circuits.

The following specifically describes each constituent component of the electronic device 100 in detail with reference to FIG. 1.

The RF circuit 210 may be configured to: receive and send data in a communication or call process. Specifically, after receiving downlink data from a base station, the RF circuit 210 sends the downlink data to the processor 230 for processing, and sends to-be-sent uplink data to the base station. Generally, the RF circuit 210 includes but is not limited to an antenna, at least one amplifier, a transceiver, a coupler, a low noise amplifier (low noise amplifier, LNA), and a duplexer.

In addition, the RF circuit 210 may communicate with another device through a wireless communication network. The wireless communication may use any communication standard or protocol, including but not limited to global system for mobile communications (global system of mobile communications, GSM), general packet radio service (general packet radio service, GPRS), and code division multiple access (code division multiple access, CDMA), wideband code division multiple access (wideband code division multiple access, WCDMA), long term evolution (long term evolution, LTE), email, short messaging service (short messaging service, SMS), and the like.

A Wi-Fi technology belongs to a short-range wireless transmission technology. The electronic device 100 may be connected to an access point (access point, AP) through the Wi-Fi module 290, to implement access to a data network. The Wi-Fi module 290 may be configured to: receive and send data in a communication process.

The electronic device 100 may be physically connected to another device through the communication interface 280. Optionally, the communication interface 280 is connected to a communication interface of the another device through a cable, to implement data transmission between the electronic device 100 and the another device.

The electronic device 100 can further implement a communication service and interact with another electronic device. Therefore, the electronic device 100 needs to have a data transmission function. That is, the electronic device 100 needs to include a communication module. Although FIG. 1 shows communication modules such as the RF circuit 210, the Wi-Fi module 290, and the communication interface 280, it may be understood that the electronic device 100 includes at least one of the foregoing components or another communication module (for example, a Bluetooth module) configured to implement communication, for data transmission.

For example, when the electronic device 100 is a mobile phone, the electronic device 100 may include the RF circuit 210, and may further include the Wi-Fi module 290, or may include a Bluetooth module (not shown in FIG. 1). When the electronic device 100 is a tablet computer, the electronic device 100 may include the Wi-Fi module, or may include a Bluetooth module (not shown in FIG. 1). When the electronic device 100 is a smart home device, the electronic device 100 may include the Wi-Fi module 290, or may include a Bluetooth module (not shown in FIG. 1).

The memory 240 may be configured to store a software program and a module. The processor 230 runs the software program and the module that are stored in the memory 240, to implement various function applications and data processing of the electronic device 100. Optionally, the memory 240 may mainly include a program storage area and a data storage area. The program storage area may store an operating system (mainly including software programs or modules respectively corresponding to a kernel layer, a system layer, an application framework layer, an application layer, and the like).

In addition, the memory 240 may include a high-speed random access memory, and may further include a nonvolatile memory, for example, at least one magnetic disk storage device, a flash memory device, or another volatile solid-state storage device.

The input unit 250 may be configured to: receive editing operations of a plurality of different types of data objects such as digit or character information input by a user, and generate a button signal input related to a user setting and function control of the electronic device 100. Optionally, the input unit 250 may include a touch panel 251 and another input device 252.

The touch panel 251, also referred to as a touchscreen, may collect a touch operation performed by the user on or near the touch panel (for example, an operation performed by the user on the touch panel 251 or near the touch panel 251 by using any proper object or accessory such as a finger or a stylus), and drive a corresponding connection apparatus based on a preset program. In embodiments of this application, the touch panel 251 may collect a user operation performed by the user on or near the touch panel 251. For example, when the electronic device 100 is a mobile phone, the user operation may be a selection operation, a copy operation, a cut operation, or the like on text information, or may be a touch and hold operation on picture information, or may be a switching operation for viewing a plurality of recommended services provided in this embodiment of this application.

Optionally, the another input device 252 may include but is not limited to one or more of a physical keyboard, a function button (for example, a volume control button or a power on/off button), a tracking ball, a mouse, a joystick, and the like.

The display unit 260 may be configured to display information input by the user, information provided for the user, and various menus of the electronic device 100. The display unit 260 is a display system of the electronic device 100, and is used to present an interface to implement human-computer interaction. The display unit 260 may include a display panel 261. Optionally, the display panel 261 may be configured in a form such as a liquid crystal display (liquid crystal display, LCD) or an organic light-emitting diode (organic light-emitting diode, OLED). In this embodiment of this application, the display unit 260 may be configured to display a user interface, for example, may display a service recommendation interface provided based on the method provided in this embodiment of this application. The service recommendation interface may include one or more recommended services.

The processor 230 is a control center of the electronic device 100, connects to the components by using various interfaces and lines, and runs or executes the software program and/or the module stored in the memory 240 and invokes the data stored in the memory 240, to perform various functions of the electronic device 100 and process the data, so as to implement a plurality of services of the electronic device 100. In embodiments of this application, the processor 230 may be configured to implement the service recommendation method provided in embodiments of this application.

The electronic device 100 further includes the power supply 220 (such as a battery) configured to supply power to the components. Optionally, the power supply 220 may be logically connected to the processor 230 by using a power management system, to implement functions such as charge management, discharge management, and power consumption management by using the power management system.

As shown in FIG. 1, the electronic device 100 further includes an audio circuit 270, a microphone 271, and a loudspeaker 272, and may provide an audio interface between the user and the electronic device 100. The audio circuit 270 may be configured to: convert audio data into a signal that can be identified by the loudspeaker 272, and transmit the signal to the loudspeaker 272. The loudspeaker 272 converts the signal into a sound signal for output. The microphone 271 is configured to: collect an external sound signal (for example, a sound of person speaking, or another sound), convert the collected external sound signal into a signal that can be identified by the audio circuit 270, and send the signal to the audio circuit 270. The audio circuit 270 may be further configured to: convert the signal sent by the microphone 271 into audio data, and then output the audio data to the RF circuit 210 for sending to, for example, another electronic device, or output the audio data to the memory 240 for subsequent processing.

Although not shown, the electronic device 100 may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in embodiments of this application is the most basic system software running on the electronic device 100. A software system of the electronic device 100 may use a layered architecture, an event-driven architecture, a microkemel architecture, a micro service architecture, or a cloud architecture. In this embodiment of this application, an operating system using a layered architecture is used as an example to describe a software architecture of the electronic device 100.

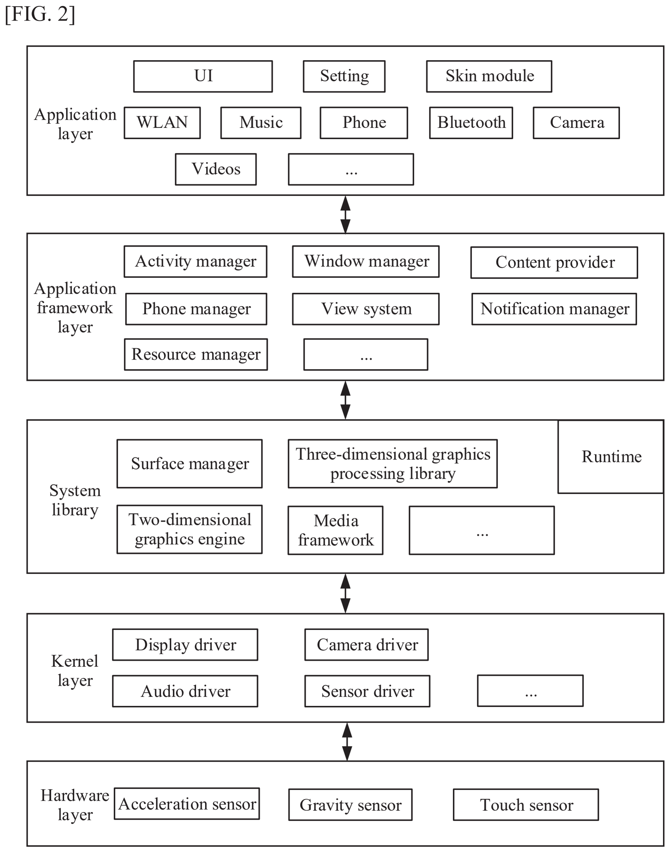

FIG. 2 is a block diagram of a software architecture of an electronic device according to an embodiment of this application. As shown in FIG. 2, the software architecture of the electronic device may be a layered architecture. For example, software may be divided into several layers, and each layer has a clear role and responsibility. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 2, the application layer may include a user interface (user interface, UI), a camera, settings, a skin module, a third-party application, and the like. The third-party application may include, for example, a wireless local area network (wireless local area network, WLAN), music, a call, Bluetooth, a video, and the like. At the application layer, attributes of an element and a shadow of the element that are included in the UI may be further defined based on a system interface.

In a possible implementation, an application may be developed by using a Java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 2, the application framework layer may include a view system, an activity manager, a window manager, a content provider, a phone manager, a resource manager, a notification manager, and the like.

The activity manager is configured to: manage a life cycle of each application, provide a common navigation rollback function, and provide an interaction interface for windows of all programs.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes a visual control (which may also be referred to as a "visual element") and a non-visual control (which may also be referred to as a "non-visual element"), for example, a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, hang-up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that runs in a background, or may be a notification that appears on a screen in a form of a dialog window. For example, text information is prompted in the status bar, an announcement is given, the electronic device vibrates, or the indicator light blinks.

A runtime includes a core library and a virtual machine. The runtime is responsible for scheduling and managing an operating system.

The core library includes two parts: a performance function that needs to be invoked in Java language, and a core library of the operating system. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media framework supports playback and recording of audios and videos in a plurality of commonly used formats, static image files, and the like. The media framework may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing. The two-dimensional graphics engine may perform a drawing operation, to draw the element and the shadow of the element that are included in the UI on the screen.

In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

Generally, the electronic device 100 may run a plurality of applications at the same time. In a simple case, one application may correspond to one process, and in a complex case, one application may correspond to a plurality of processes. Each process has a process number (process ID).

It should be understood that "at least one of the following items (pieces)" or a similar expression thereof in embodiments of this application indicates any combination of these items, and includes a singular item (piece) or any combination of plural items (pieces). For example, at least one of a, b, or c may represent: a, b, c, a and b, a and c, b and c, or a, b and c, where a, b, and c may be a singular or plural number. "A plurality of" means two or more than two. The term "and/or" is used to describe an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, it should be understood that in description of this application, terms such as "first" and "second" are merely used for distinguishing and description, but should not be understood as indicating or implying relative importance, or should not be understood as indicating or implying a sequence.

It should be understood that the hardware structure of the electronic device may be shown in FIG. 1, and a software system architecture may be shown in FIG. 2. A software program and/or a module corresponding to the software system architecture of the electronic device may be stored in the memory 240. The processor 230 may run the software program and an application that are stored in the memory 240, to perform a procedure of a service recommendation method provided in embodiments of this application.

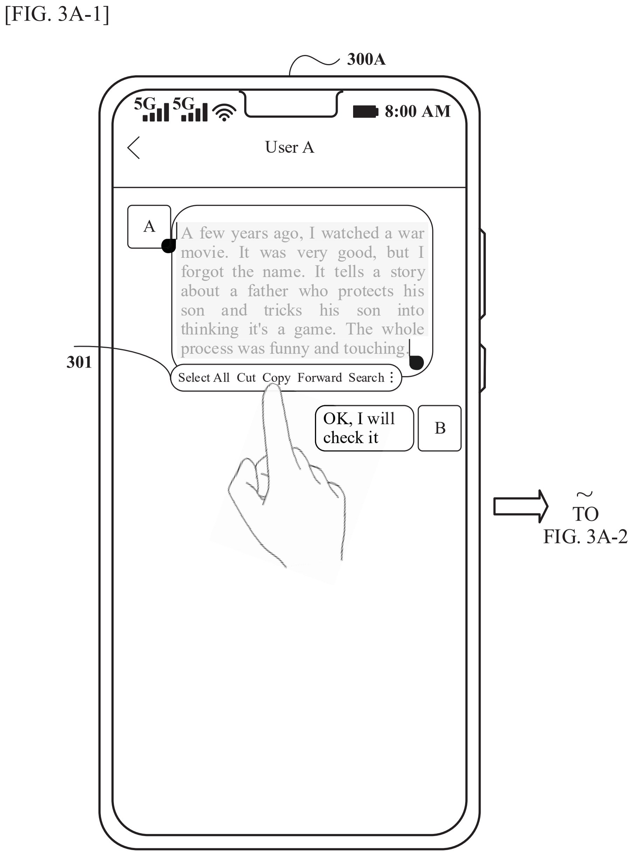

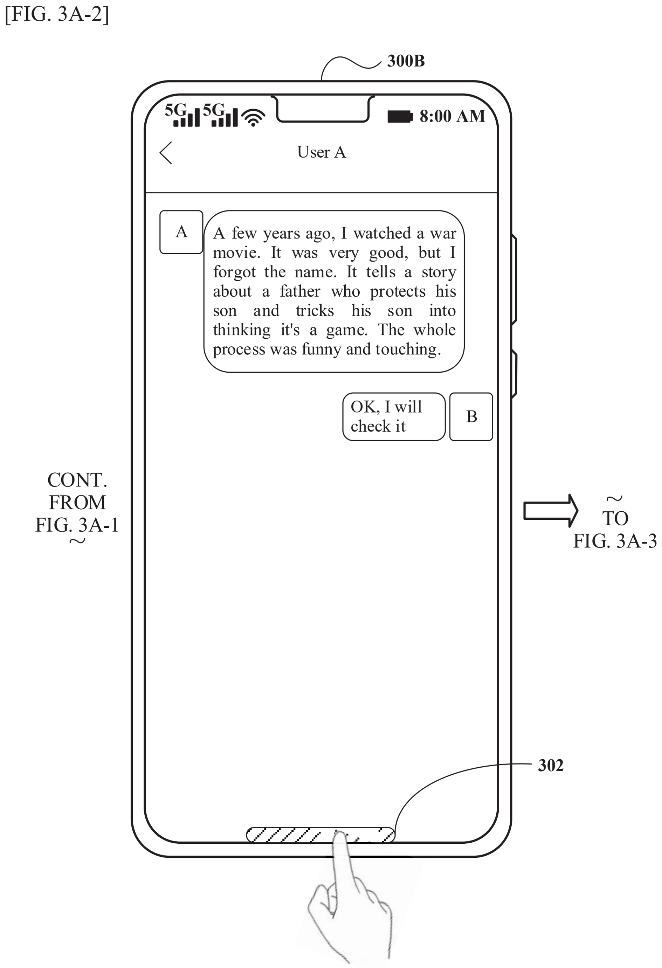

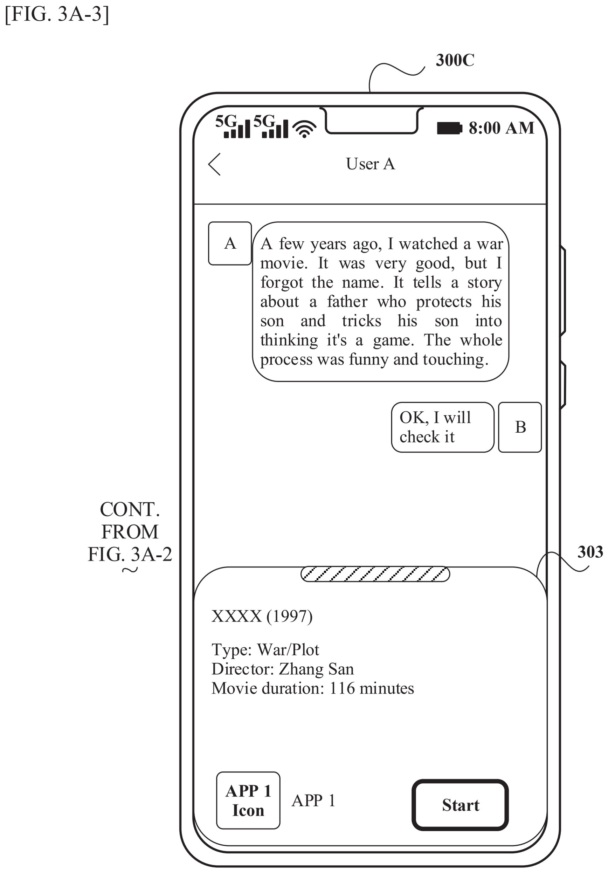

To facilitate understanding of the service recommendation method provided in this application, the following describes an implementation process of the method provided in this application with reference to content shown in FIG. 3A-1 to FIG. 8C. For ease of understanding, the following first describes several possible application scenarios in which the method provided in this application is used. It should be noted that, in the following embodiments, an example in which the electronic device is a mobile phone is used. For implementation of another type of electronic device, refer to implementation of the mobile phone. Details are not described in this application again.

### Scenario A: Single-intention-based service recommendation

FIG. 3A-1 to FIG. 3A-3 are interface diagrams of a service recommendation method according to an embodiment of this application. FIG. 3A-1 shows that the interface 300A includes a chat interface. When detecting a selection operation on chat text information sent by a user A, the mobile phone may display a pop-up window 301 in response to the selection operation. The chat text information sent by the user A is, for example, "A few years ago, I watched a war movie. It was very good, but I forgot the name. It tells a story about a father who protects his son and tricks his son into thinking it's a game. The whole process was funny and touching.". The pop-up window 301 may include but is not limited to the following controls: Select all, Cut, Copy, Forward, Search, and the like. For example, in response to a tap operation on the copy control included in the pop-up window 301, the electronic device may display an interface 300B. It should be noted that the electronic device may further respond to an operation on the select all control, the cut control, the forward control, the search control, or the like included in the pop-up window 301. It should be understood that any operation that can be used to obtain reference information can trigger display of the interface 300B. The reference information may be understood as sample information used to recommend a service. The reference information in the interface 300A is, for example, chat text information sent by the user A. In addition, to improve accuracy of service recommendation, service recommendation may be further performed with reference to a plurality of pieces of chat text information. For example, not only the chat text information sent by the user A may be used as the reference information, but also semantic context analysis may be performed with reference to chat text information "OK, I will check it" replied by the user B, so that it may be determined that the user B expects to view content mentioned in the chat text information of the user A.

In the interface 300B included in FIG. 3A-2, a shortcut entry 302 may be included at the bottom, and the shortcut entry may be used to jump to a service recommendation interface. For example, the electronic device may display an interface 300C in response to a tap operation or a pull-up operation on the shortcut entry 302. It should be noted that a display style of the shortcut entry 302 is not limited in this application, and the shortcut entry 302 may further be displayed in another possible style, for example, a style like a floating icon, a floating window, or a pop-up window. In addition, the shortcut entry 302 may be further displayed with reference to various colors and effects, so as to prompt the user. For example, a color and a blinking (or flashing) effect may be used to prompt the user with a recommended service for the user operation. It should be understood that a display position of the shortcut entry 302 is not limited in this embodiment of this application. For example, the shortcut entry 302 may be displayed at any possible position like a bottom, a side, a top, or a middle of the interface. It should be further understood that the shortcut entry 302 may be displayed in a superimposed manner, or it may be understood that the shortcut entry 302 is displayed in a superimposed manner based on the interface 300A in FIG. 3A-1. In this case, the shortcut entry 302 may be provided by a system, or may be provided by an application. Alternatively, the shortcut entry 302 may be a part included in the interface 300B, for example, a control or a display area. In this case, the shortcut entry 302 may be provided by an application. In addition, it may be understood that when determining that there is no recommended service for the reference information, the electronic device may not display the shortcut entry 302.

In the interface 300C included in FIG. 3A-3, a recommended service may be displayed by using a semi-modal pop-up window 303. As shown in the pop-up window 303, the recommended service may be a brief introduction to the movie *XXXX.* For example, the brief introduction may include but is not limited to related service information, for example, a release year, a movie type, a director, and a film length. For another example, the recommended service may further include an app icon that provides the related service information, an app name, and a control used to jump to the app. It should be noted that a form and content of the service recommendation interface are not limited in this embodiment of this application. For example, in addition to a form of the pop-up window 303, the service recommendation interface may be displayed in a full-screen manner, or may be displayed in a manner of jumping to a new interface. For another example, the content may alternatively be related service information that can be provided by another app. The related service information displayed in the pop-up window 303 may be triggered when it is determined, based on a service type that can be provided by an app 1 and that is collected in advance, that the app 1 can provide a service function of a movie introduction.

It should be noted that, in this embodiment of this application, it is not limited that the recommended service is displayed in a non-full-screen interface in a semi-modal form, and may be displayed in any non-full-screen interface, for example, a floating window or a pop-up window, so that an impact on the current display interface can be reduced, the recommended service may be further displayed to the user. In the following embodiments, a semi-modal interface (which may also be referred to as a "semi-modal window") is used as an example, and introduction content of the non-full-screen interface in another form is not described again.

In addition, it may be understood that, in the interface 300A, the reference information selected by the user does not include a specific movie name. Therefore, the recommended service displayed in the interface 300C may be a fuzzy intention obtained by performing processing like semantic understanding based on the reference information obtained in the interface 300A.

In another possible scenario, FIG. 3B-1 to FIG. 3B-3 are another interface diagrams of a service recommendation method according to an embodiment of this application. Compared with that in FIG. 3A-1 to FIG. 3A-3, in an interface 300A', an interface 300B', and an interface 300C' included in FIG. 3B-1 to FIG. 3B-3, the reference information may be "A few years ago, I watched a war movie *XXXX.* It was very good. It tells a story about the father who protects his son and tricks his son into thinking it's a game. The whole process was funny and touching." It can be seen that the reference information includes the movie name, and therefore, an explicit intention may be obtained based on the reference information.

FIG. 3C-1 to FIG. 3C-3 are another interface diagrams of a service recommendation method according to an embodiment of this application. An interface 300D, an interface 300E, and an interface 300F shown in FIG. 3C-1 to FIG. 3C-3 are different service recommendation interfaces. For obtaining the interface 300D to the interface 300F, refer to the manners described in FIG. 3A-1 to FIG. 3A-3 and FIG. 3B-1 to FIG. 3B-3. A procedure of how to display the service recommendation interface is not described again in this scenario. Different from that in FIG. 3A-1 to FIG. 3A-3 and FIG. 3B-1 to FIG. 3B-3, the user intention obtained based on the reference information may provide recommended services from a plurality of different apps. The recommended service may be, for example, an introduction to a movie *XXXX* provided by a video app 1 shown in the interface 300D, or may be an introduction to a movie *XXXX* provided by a video app 2 shown in the interface 300E, or may be an introduction to a movie *XXXX* provided by a video app 3 shown in the interface 300D. As shown in FIG. 3C-1 to FIG. 3C-3, different service recommendation interfaces may be switched by performing a left-right sliding operation or a tap operation on a navigation point included in a navigation bar 304. In addition, the quantity of service recommendations included in the pop-up window 303 and the currently displayed service recommendation interface may be further viewed by using the navigation bar 304.

It should be noted that a manner of switching and displaying the plurality of service recommendation interfaces is not limited in this embodiment of this application. For example, switching may be implemented by performing the left-right sliding operation shown in FIG. 3C-1 to FIG. 3C-3, or switching may be implemented by performing an up-down sliding operation, or switching may be implemented in a form of a plurality of service widgets, or switching may be implemented in a form of a combination widget. For another example, FIG. 3D is another interface diagram of a service recommendation method according to an embodiment of this application. As shown in the interface 300G in FIG. 3D, a plurality of recommended services may be further switched in a form of a plurality of service widgets, and different service widgets may be displayed by performing an up-down sliding operation. In another optional manner, different service recommendation interfaces may be alternatively displayed in the service recommendation interface at the same time. For example, recommended services of a plurality of different apps may be displayed in a sliding window, and the user may view the displayed plurality of service recommendation interfaces by performing a sliding operation. For another example, display sizes of the plurality of recommended services may be adaptively adjusted based on a size of a semi-modal service recommendation interface, so that the plurality of recommended services are displayed in the semi-modal service recommendation interface at the same time.

It may be understood that when the reference information includes description content of another type like music or a TV series, the implementation process described in FIG. 3A-1 to FIG. 3D may also be referred to. Details are not described in this application again.

In some other possible scenarios, the reference information may further include but is limited to the following information types: text content and/or image content including a merchant name, text content and/or image content including an item name, text content and/or image content including a time event, protocol-type text content including, for example, an app password, or text content and/or image content including another language, for example, English. The protocol-type text content may be understood as text content in a specified format.

For example, FIG. 4 is an interface diagram of a service recommendation method according to an embodiment of this application. An interface 400A included in FIG. 4 includes text information including a merchant name, and a recommended service may be navigation preview information provided by a map app 1. An interface 400B included in FIG. 4 includes text information including a time event, and a recommended service may be used to quickly create a schedule. An interface 400C included in FIG. 4 includes picture information in English, and a recommended service may be a translation service.

### Scenario B: Multi-intention-based service recommendation

FIG. 5A-1 to FIG. 5A-3 are interface diagrams of a service recommendation method according to an embodiment of this application. FIG. 5A-1 to FIG. 5A-3 show that an interface 500A, an interface 500B, and an interface 500C are different service recommendation interfaces. For obtaining the interface 500A to the interface 500C, refer to the manner described in FIG. 3A-1 to FIG. 3A-3. A procedure of how to display the service recommendation interface is not described again in this scenario.

Based on chat text information "I heard that the environment and taste of Li Ji steak (XX store) are good. Let's go there when we have time" sent by user C, a plurality of related services may be recommended. For example, in the interface 500A, the recommended service may be navigation preview information provided by the map app 1. For another example, in the interface 500B, the recommended service may be taxi hailing preview information provided by a taxi hailing app 1. For still another example, in the interface 500C, the recommended service may be comment preview information provided by a comment app 1. It can be learned from the interface 500A to the interface 500C shown in FIG. 5A-1 to FIG. 5A-3 that, based on the reference information, a plurality of user intentions may be identified, and the plurality of recommended services may be obtained based on the plurality of user intentions.

The interface 500A may include a navigation bar 501. A quantity of navigation points included in the navigation bar 501 may be determined based on a quantity of recommended services. In addition, a navigation point corresponding to a current interface displayed in the navigation bar 501 may have a different style from a navigation point corresponding to another interface. For example, the navigation point corresponding to the current interface may be a black navigation point, and the navigation point corresponding to the another interface may be a white navigation point. For example, the electronic device detects and responds to a tap operation on another navigation point, a left-right sliding operation on an interface, or the like, and can switch to display interfaces including different recommended services, for example, switch from the interface 500A to the interface 500B, and for another example, switch from the interface 500B to the interface 500C.

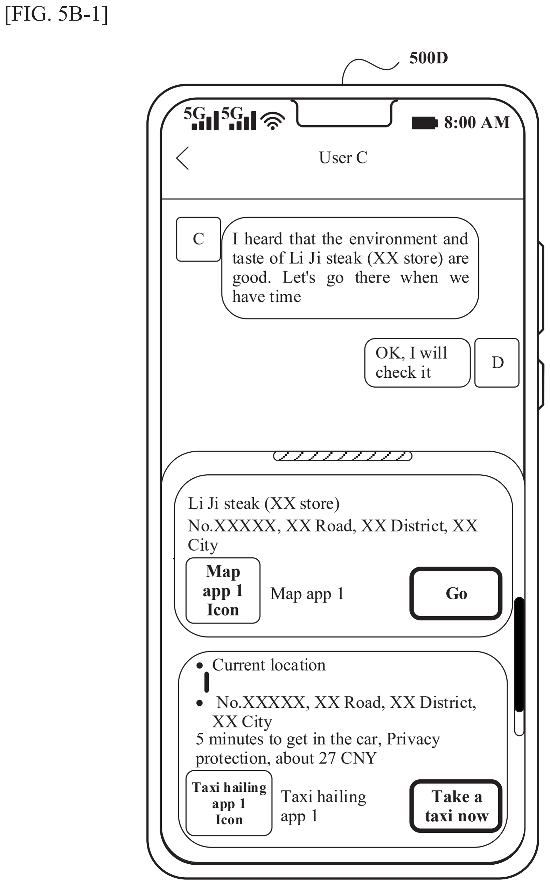

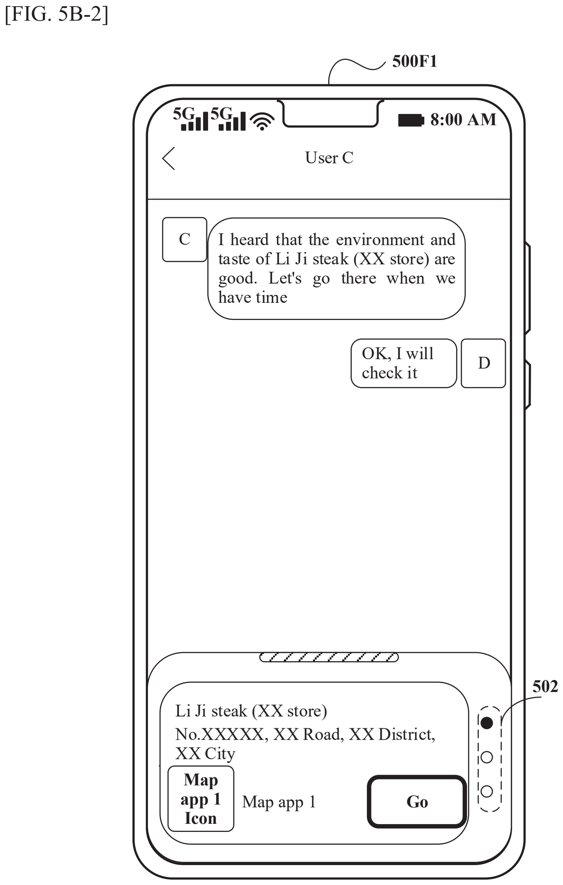

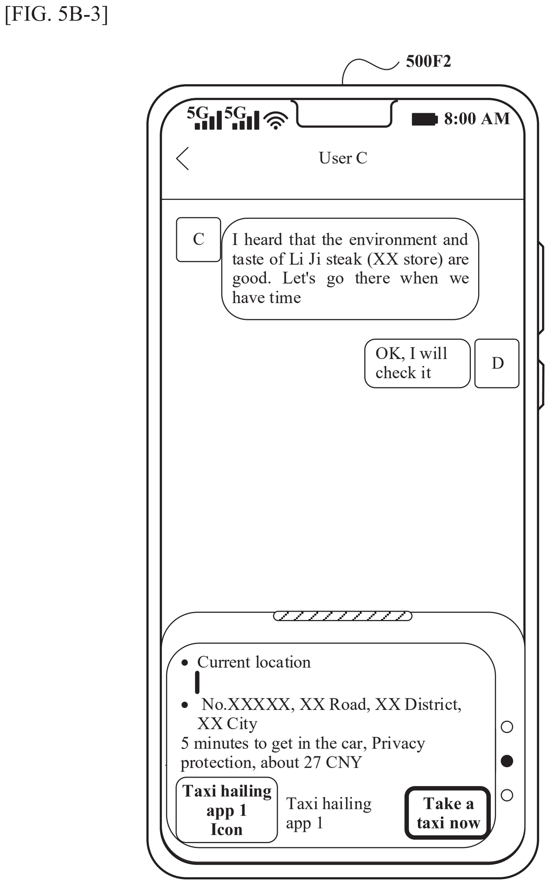

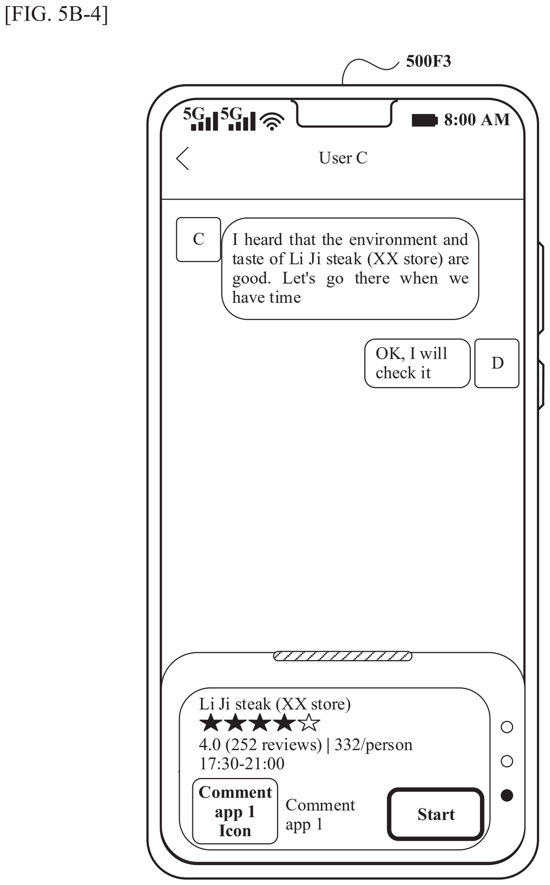

It should be noted that a display manner of including a plurality of recommended service interfaces is not limited in this embodiment of this application. For example, FIG. 5B-1 to FIG. 5B-4 are another interface diagrams of a service recommendation method according to an embodiment of this application. In an interface 500D included in FIG. 5B-1, a plurality of recommended services may be sequentially displayed in a vertical manner. In addition, when the plurality of recommended services cannot be completely displayed, more recommended services may be viewed in an up-down sliding manner. For example, a sliding bar may be further included on a right side of a pop-up window, to prompt the user with more recommended services that can be viewed. Alternatively, when the plurality of recommended services cannot be completely displayed, the pop-up window may be dragged upward to expand a display range of the pop-up window, so that more recommended services can be displayed.

In an interface 500F1, an interface 500F2, and an interface 500F3 included in FIG. 5B-2 to FIG. 5B-4, the plurality of recommended services may be further displayed in a stacked widget form. For example, a navigation bar 502 may be included on the right side of the pop-up window included in the interface 500F1. By tapping different navigation points or performing an up-down sliding operation on the stacked widget, interfaces including different recommended services may be switched to be displayed, for example, from the interface 500F1 to the interface 500F2, and for another example, from the interface 500F2 to the interface 500F3. It should be understood that, in the pop-up window used for service recommendation, various recommended services may be displayed in a form such as an interface or a widget. A display manner of the recommended service is not limited in this application.

For example, FIG. 5C is another interface diagram of a service recommendation method according to an embodiment of this application. In an interface 500G included in FIG. 5C, the plurality of recommended services may be further displayed in one or a combination of a plurality of columns, a plurality of sizes of widgets, and the like. For example, in the interface 500G, the navigation preview information provided by the map app 1 and the taxi hailing preview information provided by the taxi hailing app 1 may be jointly displayed in one row. In this case, widgets or interfaces for displaying the recommended services are scaled down, and the comment preview information provided by the comment app 1 may be separately displayed in one row.

It should be noted that a type of the reference information is not limited in this embodiment of this application. The reference information may include but is not limited to at least one of the following information: text information, picture information, and the like. For example, FIG. 6 is another interface diagram of a service recommendation method according to an embodiment of this application. An interface 600 shown in FIG. 6 may be a browsing interface of a comment app or a sharing app, and the browsing interface may include picture information and text information. In response to a long press operation on a picture 601, the electronic device may use the picture 601 as reference information, so that service recommendation can be performed based on the picture 601. For example, information about a plurality of merchants including steak may be recommended. In another example, to improve accuracy of service recommendation, other information included in the interface including the picture information may be further combined, for example, positioning information 602 included in the interface 600 may be further extracted, so that more accurate merchant information can be determined. In this way, the navigation preview information provided by the map app 1 about the merchant may be provided based on the picture information and the text information, and the taxi hailing preview information provided by the taxi hailing app 1 shown in FIG. 5A-1 to FIG. 5A-3, the comment preview information provided by the comment app 1, and the like may be further provided.

The text information may also be text information extracted from the picture, for example, the text information may be extracted from a screenshot. The picture information may be an image frame captured from a video, or may be a local picture obtained by segmenting a global picture.

With reference to the content described in FIG. 3C-1 to FIG. 3C-3, each user intention may further provide services from a plurality of different apps. Based on this, each intention may also obtain a plurality of recommended services. FIG. 7A-1 to FIG. 7A-6 are interface diagrams of a service recommendation method according to an embodiment of this application. As shown in an interface 700A1 and an interface 700A2 in FIG. 7A-1 and FIG. 7A-2, an identified user intention 1 may be used to provide, based on a merchant name, navigation preview information from a map app. It is considered that a plurality of map apps are usually installed on a mobile phone of a user, and a service corresponding to the intention 1 may include navigation preview information from a map app 1 that is shown in the interface 700A1, or may include navigation preview information from a map app 2 that is shown in the interface 700A2, or may include navigation preview information from another map app that is not shown in FIG. 7A-1 to FIG. 7A-6. Optionally, the map app 1 may be a map app usually used by the user, or may be a map app used by the user last time, or may be a built-in map app in the mobile phone. It should be understood that different services included in a same intention may be further displayed in a priority order, so that the user can preferably view a recommended service with a higher priority, thereby reducing user operations.

Similarly, as shown in an interface 700B1 and an interface 700B2 in FIG. 7A-3 and FIG. 7A-4, an identified user intention 2 may be used to provide, based on a merchant name, taxi hailing preview information from a taxi hailing app. It is considered that a plurality of taxi hailing apps are usually installed on the mobile phone of the user, and a service corresponding to the intention 2 may include taxi hailing preview information from a taxi hailing app 1 that is shown in the interface 700B1, and may further include taxi hailing preview information from a taxi hailing app 2 that is shown in the interface 700B2, or may further include taxi hailing preview information from another taxi hailing app that is not shown in FIG. 7A-1 to FIG. 7A-6. Optionally, the taxi hailing app 1 may be a taxi hailing app usually used by the user, or may be a taxi hailing app used by the user last time, or may be a built-in taxi hailing app in the mobile phone. It may be understood that, by using a plurality of services, the user can quickly compare information like a price and taxi hailing duration. For example, with reference to the interface 700B1 and the interface 700B2, it can be seen that an estimated taxi hailing price of the taxi hailing app 1 is lower.

Similarly, as shown in an interface 700C1 and an interface 700C2 in FIG. 7A-5 and FIG. 7A-6, an identified user intention 3 may be used to provide, based on a merchant name, review preview information from a review app. It is considered that a plurality of review apps are usually installed on the mobile phone of the user, and a service corresponding to the intention 3 may include review preview information from a review app 1 that is shown in the interface 700C1, and may further include review preview information from a review app 2 that is shown in the interface 700C2, or may further include review preview information from another review app that is not shown in FIG. 7A-1 to FIG. 7A-6. Optionally, the review app 1 may be a review app usually used by the user, or may be a review app used by the user last time, or may be a built-in review app in the mobile phone. It may be understood that, by using a plurality of services, the user can quickly view review preview information of different review apps for the merchant. As shown in the interface 700C1, a comment score of the merchant on the review app 1 is 4.0 points. As shown in the interface 700C2, a comment score of the merchant on the review app 2 is 5.0 points.

It should be noted that, in this embodiment of this application, recommended services that are from a plurality of applications and that are respectively included in a plurality of intentions may be displayed in a plurality of display manners. For example, the manners may include but are not limited to the following manners.

Manner 1: As shown in the interface 700A1, the interface 700B1, and the interface 700C1 included in FIG. 7A-1 to FIG. 7A-6, different user intentions may be displayed by switching through a left-right sliding operation. In addition, in the interface 700A1, different services corresponding to the intention 1 may be displayed by switching through an up-down sliding operation. Similarly, in the interface 700B1, different services corresponding to the intention 2 may be displayed by switching through the up-down sliding operation. Similarly, in the interface 700C1, different services corresponding to the intention 3 may be displayed by switching through the up-down sliding operation. In this manner, different recommended services that belong to a same intention or recommended services that belong to different intentions may be switched between each other by using different operations, so that a plurality of possible recommended services can be displayed.

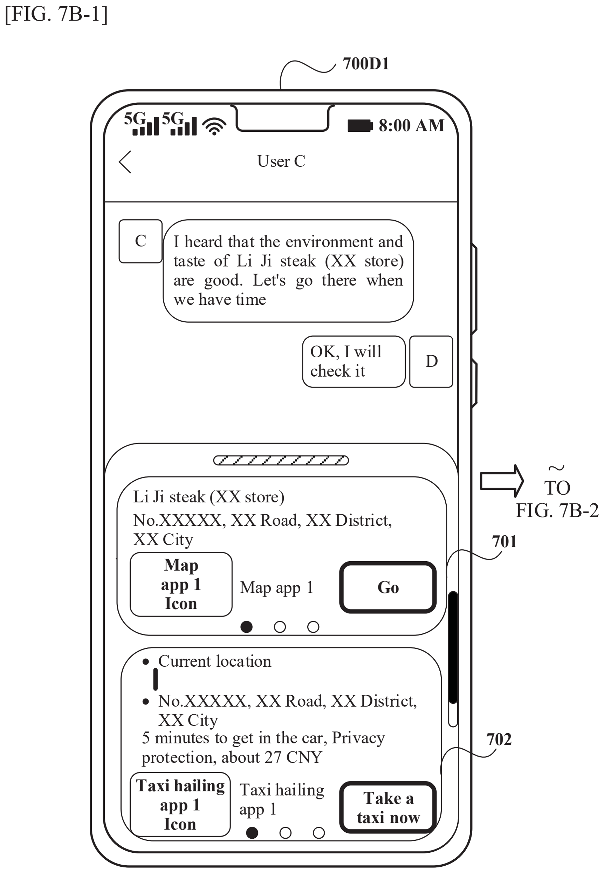

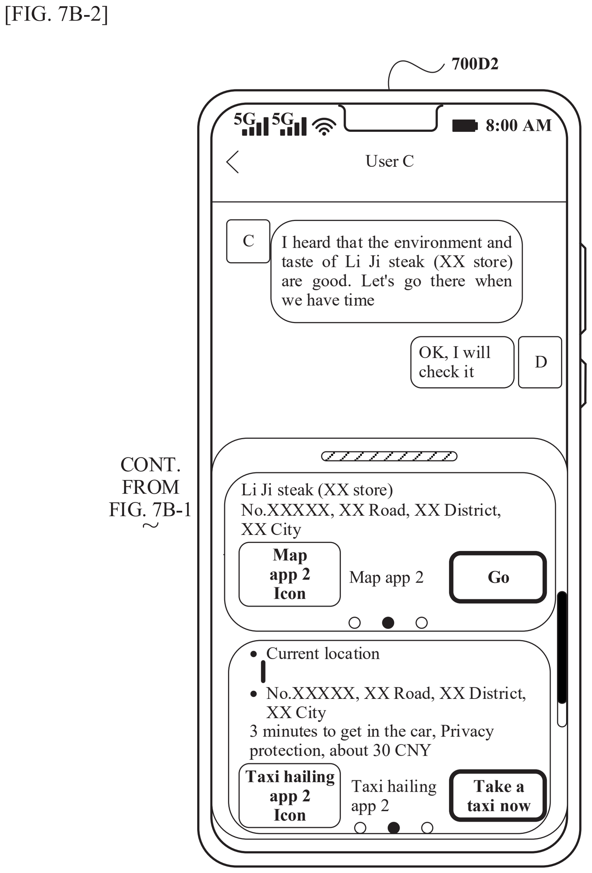

Manner 2: FIG. 7B-1 and FIG. 7B-2 are interface diagrams of a service recommendation method according to an embodiment of this application. An interface 700D1 included in FIG. 7B-1 may include a plurality of display areas that are sequentially arranged in a vertical direction, for example, a display area 701 and a display area 702. The display area 701 is used to display a service corresponding to the intention 1, and the display area 702 is used to display a service corresponding to the intention 2. In addition, in each display area, different services corresponding to a same intention may be displayed by switching through a left-right sliding operation. As shown in an interface 700D2 included in FIG. 7A-1 to FIG. 7A-6, a left-right sliding operation may be performed in the display area 701 to switch a service 1 corresponding to the intention 1 to a service 2 corresponding to the intention 1; and the left-right sliding operation may be performed in the display area 702 to switch the service 1 corresponding to the intention 2 to the service 2 corresponding to the intention 2.

It should be noted that, similar to the interface 500D included in FIG. 5B-1, the interface 700D1 may also display display areas corresponding to some intentions. For example, a display area corresponding to the intention 3 may be displayed by performing up-down sliding in a pop-up window. In addition, a manner of switching and displaying content in the display area is not limited in this embodiment of this application. In addition to the left-right sliding operation, for example, an up-down sliding operation in the display area may be further used to implement the switching and displaying.

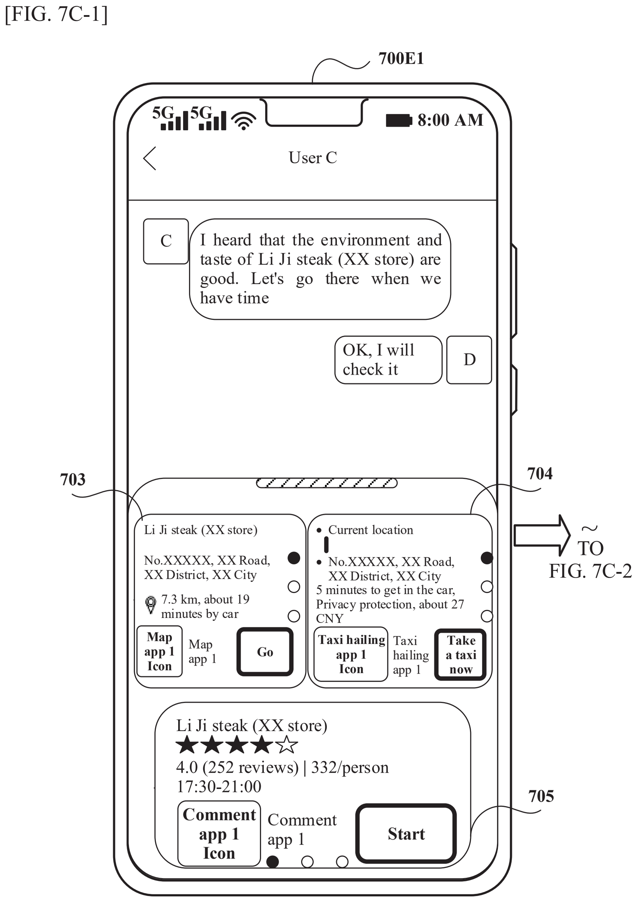

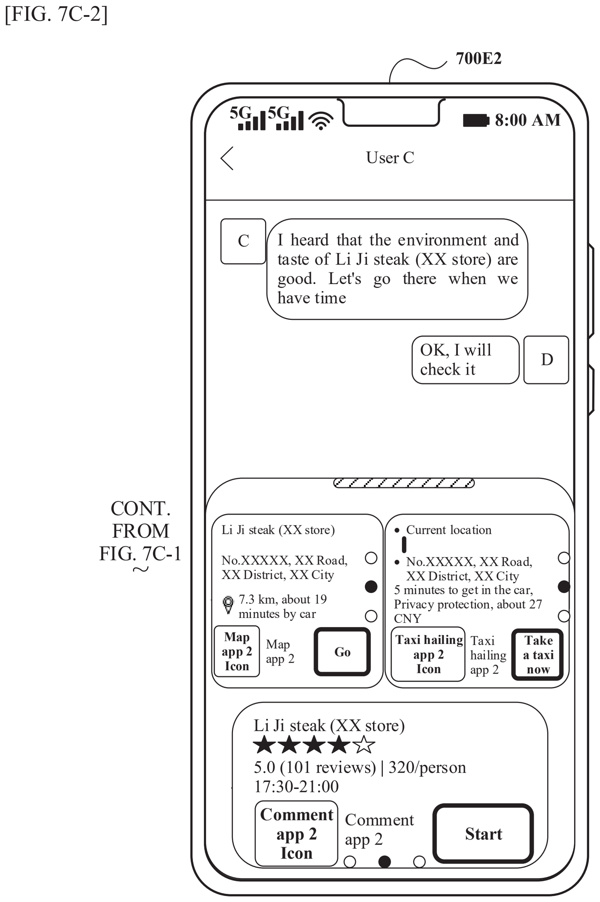

Manner 3: FIG. 7C-1 and FIG. 7C-2 are interface diagrams of a service recommendation method according to an embodiment of this application. An interface 700E1 included in FIG. 7C-1 may include a plurality of display areas arranged in combination, for example, a display area 703, a display area 704, and a display area 705. The display area 703 is used to display the service corresponding to the intention 1, the display area 704 is used to display the service corresponding to the intention 2, and the display area 705 is used to display the service corresponding to the intention 3. In addition, in each display area, different services corresponding to a same intention may be displayed by switching through an up-down sliding operation, a left-right sliding operation, or the like. As shown in the interface 700E2 included in FIG. 7A-1 to FIG. 7A-6, the up-down sliding operation may be performed in the display area 703 to switch from the service 1 corresponding to the intention 1 to the service 2 corresponding to the intention 1; the up-down sliding operation may be performed in the display area 704 to switch from the service 1 corresponding to the intention 2 to the service 2 corresponding to the intention 2; and the left-right sliding operation may be performed in the display area 705 to switch from the service 1 corresponding to the intention 3 to the service 2 corresponding to the intention 3.

In addition, a manner of switching and displaying content in the display area is not limited in this embodiment of this application. In each display area, switching and displaying may be implemented by performing the left-right sliding operation, or switching and displaying may be implemented by performing the up-down sliding operation, or switching and displaying may be implemented by performing another operation manner. This is not limited in this application.

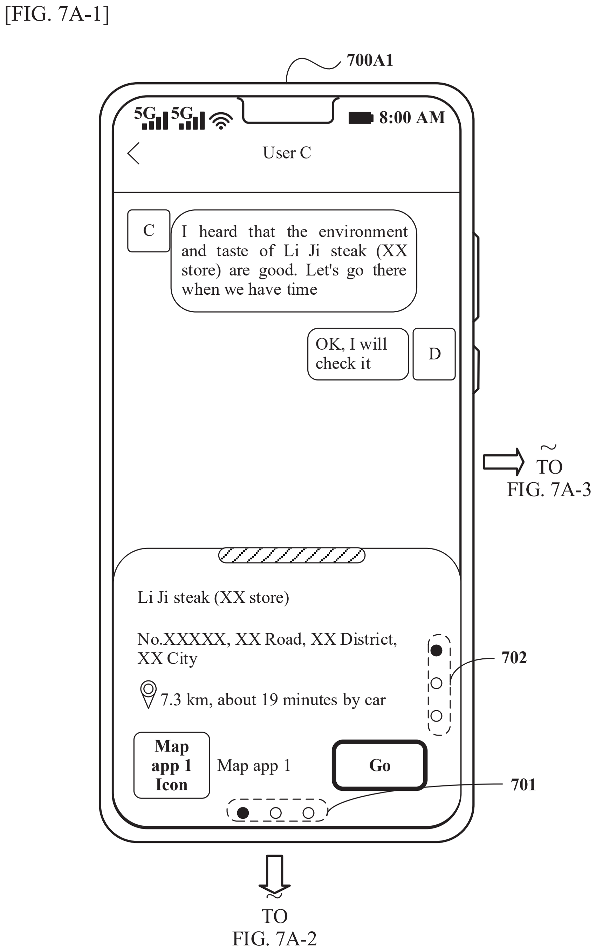

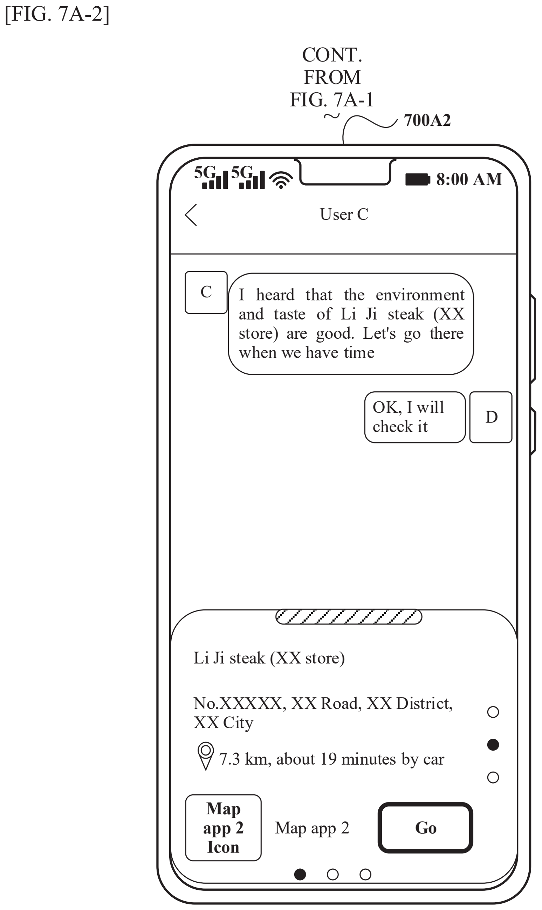

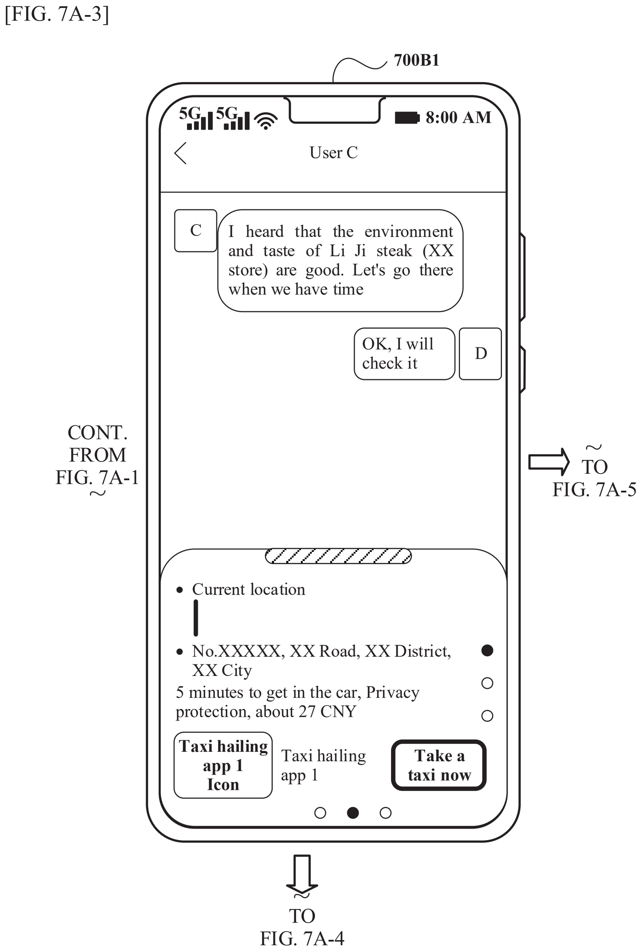

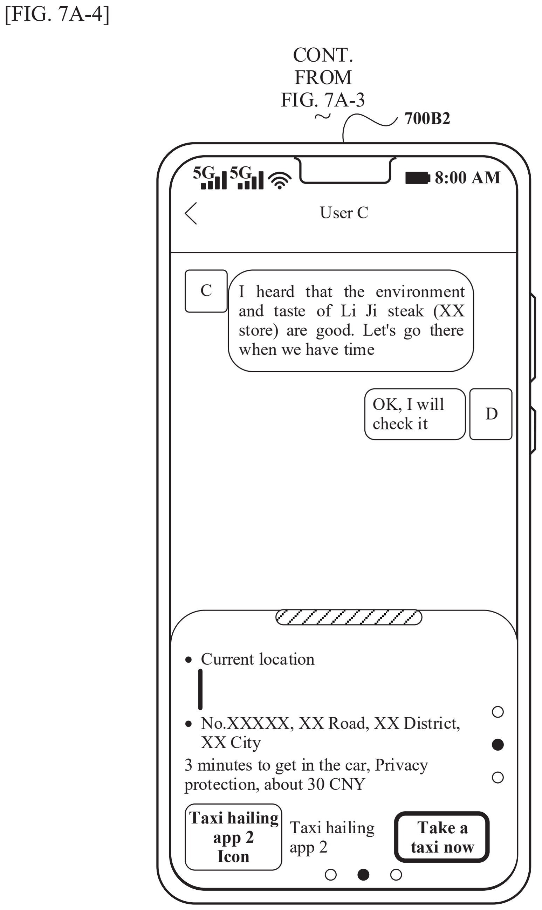

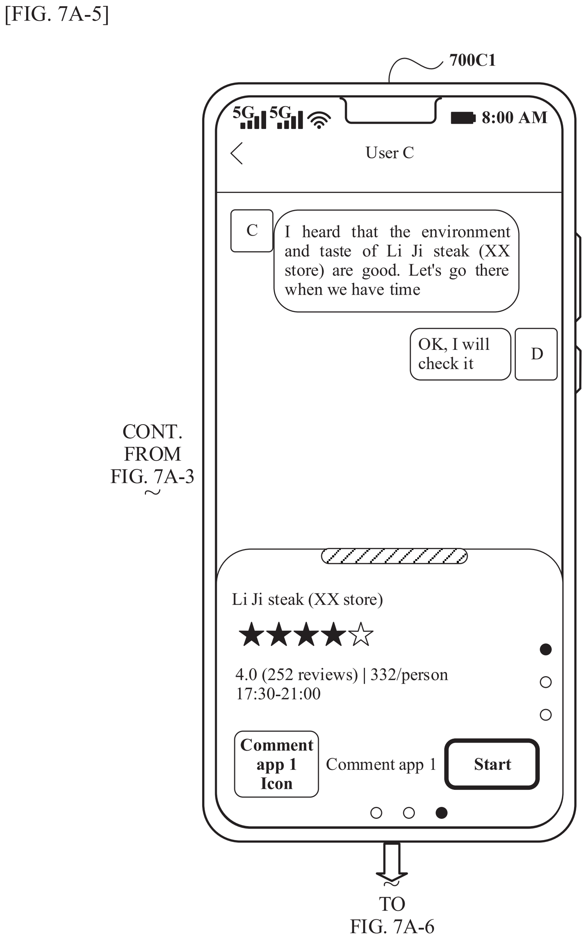

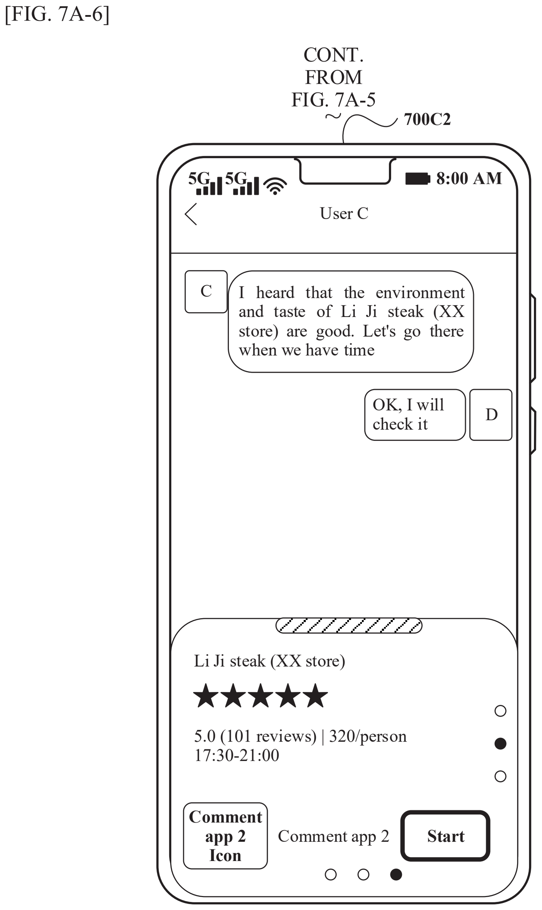

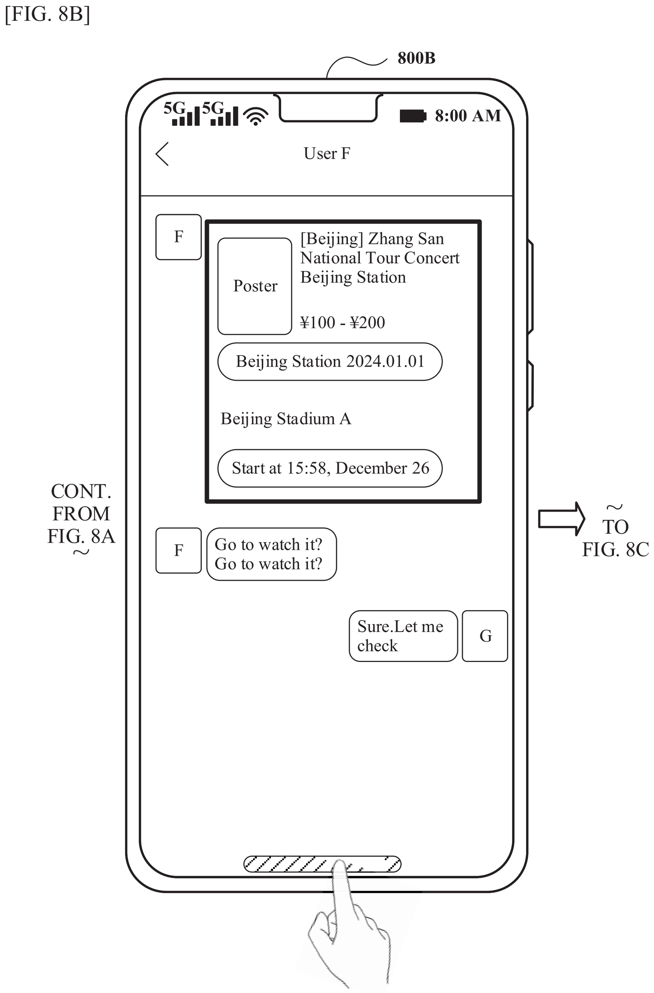

It should be noted that the foregoing scenarios are merely possible examples provided in embodiments of this application, and are not used to limit specific scenarios of this application. It should be understood that various scenarios may be combined. For example, the scenario in which the reference information is picture information shown in FIG. 6 may be combined with the scenario in which a plurality of intentions and a plurality of applications are described in FIG. 7A-1 to FIG. 7C-2. For example, FIG. 8A to FIG. 8C are another interface diagrams of a service recommendation method according to an embodiment of this application. An interface 800A in FIG. 8A is, for example, a chat interface. When detecting a touch and hold operation on chat picture information 801 sent by a user F, a mobile phone may display a shortcut entry 802 in response to the touch and hold operation. In an interface 800B shown in FIG. 8B, the mobile phone detects and responds to a tap operation, an upward drag operation, a touch and hold operation, or the like on the shortcut entry 802, and displays an interface 800C. The interface 800C may include a semi-modal interface, and the interface includes a display area 803, a display area 804, and a display area 805. The display area 803 includes navigation preview information provided by a map app 1, the display area 804 includes taxi hailing preview information provided by a taxi hailing app 1, and the display area 805 includes a recommended service used to quickly create a schedule. It can be seen from the interface 800A that the reference information is text information extracted from the chat picture information, and the reference information may further include more dialogs between the user F and a user G, for example, chat text information "Go to watch it? Go to watch it?" sent by the user F, and chat text information "OK, I'll check" sent by the user G. In this way, based on the reference information, a plurality of services corresponding to a plurality of intentions may be provided, and each intention may correspond to at least one service.

Based on the foregoing content that describes an interface processing effect that can be achieved by using the method provided in this embodiment of this application with reference to the plurality of scenarios, the following describes an implementation process of the service recommendation method provided in this application, to describe how to use the method provided in this application to achieve the interface processing effects shown in FIG. 3A-1 to FIG. 8C, so that a service recommendation function can be implemented in some scenarios, an operation procedure of a user is reduced, and operation efficiency is improved.

FIG. 9 is a schematic flowchart of a service recommendation method according to an embodiment of this application. A procedure may include the following steps.

Step 901: Collect service information that can be provided by each app. For example, service information that can be provided by each app is pre-collected, to obtain a data source of a recommended service function, so that more accurate service recommendation can be performed based on reference information and the data source of the recommended service function. For example, an example of some information included in the data source of the recommended service function may be shown in Table 1.

**Table 1**

| App name | Name of an available service |
|---|---|
| Map app 1 | Positioning information, navigation information, and taxi hailing information |
| Map app 2 | Positioning information and navigation information |
| Taxi hailing app 1 | Taxi hailing information |
| Taxi hailing app 2 | Taxi hailing information |

It should be understood that, based on the data source of the recommended service function that is obtained through collection, a correspondence between each service and an app that can provide the service may further be obtained. For example, based on the example in Table 1, the correspondence may be shown in Table 2.

**Table 2**

| Service name | App that can provide a service |
|---|---|
| Positioning information | Map app 1 and map app 2 |
| Navigation information | Map app 1 and map app 2 |
| Taxi hailing information | Map app 1, taxi hailing app 1, and taxi hailing app 2 |

It may be understood that, based on the correspondence shown in Table 2, when detecting a user intention, an electronic device may determine, based on the user intention, an app that can provide a service, and may further recommend services that are for the same user intention and that are from different apps.

It should be noted that information obtained through collection by the electronic device may be obtained from an app currently installed on the electronic device or an app that has been historically installed. For example, when a user newly installs an app, an available service of the app may be obtained, and the service is updated to a data source of a recommended service function.

Alternatively, the information obtained through collection by the electronic device may be an information library obtained from a network.

Step 902: Obtain target user behavior information of a target user account.

The target user account may be understood as a user account logged in to the electronic device. For example, obtaining the target behavior information of the target user account may include but is not limited to: collecting target user behavior information on the current electronic device; and collecting target user behavior information of another electronic device that logs in to the target user account. For example, the current electronic device may be, for example, a mobile phone, and the another electronic device may be, for example, a tablet computer. Optionally, the current electronic device and the another electronic device may communicate with each other by using distributed networking, a cloud server, or the like. For example, the target user behavior information on the another electronic device may be sent to the current electronic device by using distributed networking. For another example, the target user behavior information on the another electronic device may be first sent to the cloud server, and then sent to the current electronic device by the cloud server.

In a possible scenario, the target user account may be a user account logged in to an operating system on the electronic device, for example, a Huawei account. In this scenario, service recommendation may be implemented by the operating system.

In another possible scenario, the target user account may alternatively be a user account logged in to an app included in the electronic device. In this scenario, service recommendation may be implemented by the app.

The target user behavior information indicates user behavior information related to the recommended service provided in this embodiment of this application. For example, the target user behavior information may include but is not limited to: usage information of the user on the app, search behavior information of the user on the app, browsing behavior information of the user on the app, order information of the user on the app, video playing information of the user on the app, marking information of the user on the app, and the like. It may be understood that, based on functions and available services of different apps, different user behavior information may be collected for the different apps. For example, video playing information of the user on a video app, order information on a shopping app, and search behavior information on a navigation app may be collected. This is not limited in this application. It should be understood that types of the information collected by the different apps may be preconfigured.

For example, user behavior information within a specified time range may be collected. For example, user behavior information within one month or one week may be collected. In this way, the recommended service can more accurately reflect a recent habit of the user.

It should be noted that step 901 and step 902 are preparation information that can implement the service recommendation method provided in this embodiment of this application, and may not need to be processed in a process of performing service recommendation each time. In addition, an execution sequence of step 901 and step 902 is not limited in this embodiment of this application. For example, step 901 and step 902 may be performed in parallel.

Step 903: Obtain the reference information. The reference information may include but is not limited to at least one of text information, picture information, and the like.

For example, the electronic device may obtain the reference information in response to a first operation in a first interface. The first interface may include, for example, a chat interface, an app browsing interface, a video browsing interface, and an album browsing interface. Optionally, the first interface may be a current display interface of the electronic device, or may be an application interface displayed by the electronic device. The first operation may include, for example, but is not limited to, an operation used to select text information, for example, a copy operation, a cut operation, a search operation, a selection operation, and a drag operation for the text information, and an operation used to select picture information, for example, a copy operation, a cut operation, a search operation, a touch and hold operation, a selection operation, and a drag operation for the picture information. In addition, the picture information may be obtained by capturing an image frame from a video, and the text information may be obtained by performing text recognition from a picture.

Optionally, the reference information may be obtained by using a system clipboard or a file transfer station. For example, when the user obtains the text information and/or the picture information to the clipboard or the file transfer station by using the first operation, the electronic device may read the reference information from the clipboard or the file transfer station.

In another optional implementation, the reference information may be provided by a preset interface provided by the app. For example, when the app provides the preset interface used to obtain the reference information, the electronic device may directly obtain, from the preset interface, text information and/or picture information that are/is selected by using the first operation.

Step 904: Display a service recommendation interface based on the reference information.

For example, different processing may be performed based on different information types of the reference information. For example, one or more of the following processing manners may be included:
(1) When the information type includes protocol-type text information, for example, an app password, a corresponding app may be directly identified based on a feature of the protocol-type text information, so that a corresponding content of the corresponding app that is indicated by the reference information may be directly linked. For example, when it is detected that the information type is text information, whether the text information is the protocol-type text information may be determined based on a format of the text information. It should be understood that the protocol-type text information generally has a specified format.
(2) When the reference information includes named entities with specific meanings, such as a phone number, an email, a time, a place, a person name, and a proper noun, named entity recognition (named entity recognition, NER) processing may be performed.
(3) When the reference information includes text information, semantic understanding, intention recognition, and natural language processing (natural language processing, NLP) may be performed. For example, reference resolution may be performed on the reference information, so that a plurality of reference entities in the reference information may be identified, and a user intention can be determined.
   For example, the text information may generally include a text of a named entity and a text of a non-named entity. NER processing may be performed on the named entity, and processing like semantic understanding and NLP may be performed on the text information, so that the text information can be more accurately identified.
(4) When the reference information includes picture information, processing like picture recognition and picture segmentation may be performed, so as to determine a user intention. Optionally, after the text information is identified from the picture information, processing may be performed with reference to the foregoing processing manner of the text information. For example, when it is identified that the text information is the protocol-type text information, the processing may continue to be performed with reference to the foregoing processing manner of the protocol-type text information. In another optional manner, the electronic device may extract a region of interest (region of interest, ROI) in the picture information, so as to determine a user intention.

In an optional example, Q recommended services corresponding to P intentions are determined based on the reference information and the data source of the recommended service function. P and Q are positive integers, and Q is greater than or equal to P. It may also be understood that one intention may correspond to at least one recommended service. For example, when the electronic device identifies that the user intention is to view navigation information, the electronic device may perform service recommendation of navigation preview information based on the correspondence in Table 2 and an app that can provide the navigation information. For example, when the electronic device identifies that the user intention is to view taxi hailing information, the electronic device may perform service recommendation of taxi hailing preview information based on the correspondence in Table 2 and an app that can provide the taxi hailing navigation information.

In another optional example, Q recommended services corresponding to the P intentions are determined based on the reference information, the data source of the recommended service function, and the target user behavior information.

Optionally, the electronic device may determine a priority of the recommended service based on the target user behavior information. For example, the priority of the recommended service may be determined based on a use frequency, a last use record, and the like of the user. For example, the user uses the map app 1 most frequently. Therefore, it may be determined that a priority of a service from the map app 1 is high. For another example, the user uses the map app 2 last time. Therefore, it may be determined that a priority of a service from the map app 2 is high.

Optionally, the electronic device may screen the candidate recommended service based on the target user behavior information, where the candidate recommended service may be obtained based on a user intention. For example, if the user has used the candidate recommended service within a preset time range, the candidate recommended service may be screened, or a priority of the candidate recommended service may be set to a low priority. For example, the candidate recommended service includes providing comment information from a comment app 1, and the user has viewed the comment information provided by the comment app 1 today, so that the comment information provided by the comment app 1 may not be recommended, or the comment information may be displayed in a rear position of a plurality of recommended services. In this way, accuracy of the service recommendation can be further improved, and can better fit user preferences. Optionally, the preset time range may be, for example, preset duration, for example, one hour, half an hour, or one day. Optionally, the preset time range may be, for example, a time range starting from a first event. The first event is, for example, an event of starting a chat app. For example, the preset time range is a preset range starting from opening the chat app by the user. A manner of setting the preset time range is not limited in this application.

In an optional example, the electronic device displays the Q recommended services corresponding to the P intentions. For example, the Q recommended services may be divided into P groups based on the intentions, P display areas are determined, and the P groups are displayed in the P display areas. In addition, the P intentions may also have priorities, and therefore, the P display areas may be set based on the priorities. The P display areas may be arranged and displayed in one or a combination of a horizontal manner, a vertical manner, a single-column manner, a multi-column manner, or the like.

In another example, the Q recommended services may be displayed in sequence. The Q recommended services may be arranged and displayed in one or a combination of a horizontal manner, a vertical manner, a single-column manner, a multi-column manner, and the like.

For various display manners of the service recommendation interface, refer to the content described in FIG. 3A-1 to FIG. 8C in the foregoing. Details are not described herein again.

FIG. 10 is another schematic flowchart of a service recommendation method according to an embodiment of this application. A procedure may include the following steps.

Step 1001: Update a first interface in response to a first operation on first information included in the first interface, where the first interface after the update includes a shortcut entry, and the shortcut entry indicates that a recommended service for the first information exists.

Step 1002: Display a second interface in response to a second operation on the shortcut entry, where the second interface is used to display the recommended service.

For specific implementation processes of step 1001 and step 1002, refer to the foregoing embodiments. Details are not described in this application again.

Based on the foregoing embodiments, this application further provides an electronic device. The electronic device includes a plurality of functional modules. The plurality of functional modules interact with each other to implement functions performed by the electronic device in the methods described in embodiments of this application. The plurality of functional modules may be implemented based on software, hardware, or a combination of software and hardware, and the plurality of functional modules may be randomly combined or divided based on specific implementation. For example, the steps 901 to 904 performed by the electronic device in the embodiment shown in FIG. 9 are performed. Alternatively, the steps 1001 and 1002 performed by the electronic device in the embodiment shown in FIG. 10 are performed.

Based on the foregoing embodiments, this application further provides an electronic device. The electronic device includes at least one processor and at least one memory. The at least one memory stores computer program instructions, and when the electronic device runs, the at least one processor performs functions performed by the electronic device in the methods described in embodiments of this application. For example, the steps 901 to 904 performed by the electronic device in the embodiment shown in FIG. 9 are performed. Alternatively, the steps 1001 and 1002 performed by the electronic device in the embodiment shown in FIG. 10 are performed.

Based on the foregoing embodiments, this application further provides a computer program product. The computer program product includes a computer program (which may also be referred to as code or an instruction), and when the computer program is run, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A service recommendation method, applied to an electronic device, and comprising:
updating a first interface in response to a first operation on first information comprised in the first interface, wherein the first interface after the update comprises a shortcut entry, and the shortcut entry indicates that a recommended service for the first information exists; and
displaying a second interface in response to a second operation on the shortcut entry, wherein the second interface is used to display the recommended service for the first information.

2. The method according to claim 1, wherein the second interface comprises a first display area, the first display area is used to display a plurality of recommended services of a first user intention obtained based on the first information, and the method further comprises:
in response to a third operation on the first display area, switching from displaying a first recommended service to displaying a second recommended service in the first display area, wherein the first recommended service and the second recommended service are from different applications.

3. The method according to claim 1 or 2, wherein the shortcut entry has a preset display effect.

4. The method according to claim 3, wherein the preset display effect comprises at least one of the following: a preset color or a preset animation.

5. The method according to any one of claims 1 to 4, wherein before updating the first interface in response to the first operation on the first information comprised in the first interface, the method further comprises:
obtaining an available service of an application installed on the electronic device, wherein the available service is used to determine the recommended service based on the first information.

6. The method according to any one of claims 1 to 5, wherein before updating the first interface in response to the first operation on the first information comprised in the first interface, the method further comprises:
obtaining target user behavior information of a target user account, wherein the target user behavior information is used to perform service recommendation, and the target user account is a user account logged in to the electronic device.

7. The method according to claim 6, wherein the recommended service comprised in the second interface is determined based on the target user behavior information.

8. The method according to claim 6 or 7, wherein the recommended service comprised in the second interface is obtained after a candidate recommended service is screened based on the target user behavior information, wherein the candidate recommended service is obtained based on the first user intention; and the recommended service comprised in the second interface is a service that is determined based on the target user behavior information and that is not used by a user within a preset time range.

9. The method according to any one of claims 1 to 8, wherein the first information comprises at least one of the following types: a text and a picture.

10. The method according to any one of claims 1 to 9, wherein
when the first information comprises protocol-type text information, the first user intention is obtained by performing protocol identification on the first information; and/or
when the first information comprises a named entity, the first user intention is obtained by performing named entity recognition NER processing on the first information; and/or
when the first information comprises text information, the first user intention is obtained by performing semantic understanding on the first information; and/or when the first information comprises picture information, the first user intention is obtained by performing image recognition on the first information.

11. The method according to any one of claims 1 to 10, wherein
when the first information is the protocol-type text information, the recommended service comprises: a commodity viewing service, a video viewing service, or a merchant viewing service; and/or
when the first information comprises the named entity, the recommended service comprises at least one of the following types: a navigation recommended service, a taxi hailing recommended service, a merchant viewing service, and a schedule creation service; and/or
when the first information comprises the text information, the recommended service comprises at least one of the following types: a schedule creation service,
an audio recommended service, a video recommended service, a translation service, a navigation recommended service, a taxi hailing recommended service,
and a merchant viewing service; and/or
when the first information comprises the picture information, the recommended service comprises at least one of the following types: a schedule creation service, an audio recommended service, a video recommended service, a translation service, a navigation recommended service, a taxi hailing recommended service, and a merchant viewing service.

12. The method according to claim 11, wherein
when the protocol-type text information is a commodity protocol password, the recommended service is a commodity viewing service; when the protocol-type text information is a video protocol password, the recommended service is a video viewing service; and when the protocol-type text information is a merchant protocol password, the recommended service is a merchant viewing service; and/or
when the named entity comprises a position, the recommended service comprises at least one of the following types: a navigation recommended service and a taxi hailing recommended service.

13. An electronic device, comprising at least one processor, wherein the at least one processor is coupled to at least one memory, and the at least one processor is configured to read a computer program stored in the at least one memory, to perform the method according to any one of claims 1 to 12.

14. A computer-readable storage medium, wherein the computer-readable storage medium stores instructions; and when the instructions are run on a computer, the computer is enabled to perform the method according to any one of claims 1 to 12.

15. A computer program product comprising instructions, wherein when the computer program product runs on a computer, the computer is enabled to perform the method according to any one of claims 1 to 12.
